# EUROPEAN PATENT APPLICATION

(11) **EP 4 718 904 A1**
(43) Date of publication of application: **01.04.2026**
(21) Application number: 24835410.2
(22) Date of filing: 04.07.2024
(51) Int. Cl.: H04W 24/02, H04L 25/02

(54) **COMMUNICATION METHOD AND APPARATUS**

(30) Priority: 06.07.2023 CN 202310830758
(71) Applicant: Huawei Technologies Co., Ltd., Shenzhen, Guangdong 518129 (CN)
(72) Inventor: CHEN, Jiaxuan, Shenzhen, Guangdong 518129 (CN); TIAN, Yang, Shenzhen, Guangdong 518129 (CN); CHAI, Xiaomeng, Shenzhen, Guangdong 518129 (CN); SUN, Yan, Shenzhen, Guangdong 518129 (CN); LIANG, Jing, Shenzhen, Guangdong 518129 (CN)
(74) Representative: MERH-IP Matias Erny Reichl Hoffmann Patentanwälte PartG mbB
(86) International application number: PCT/CN2024/103672
(87) International publication number: WO 2025/007932

(57) **Abstract**

Embodiments of this application provide a communication method and a communication apparatus. The method includes determining at least two pieces of channel information, for example, latest channel information and at least one piece of historical channel information, and then determining input of a first AI model or determining a new second AI model based on a time interval between channel obtaining time corresponding to channel information and at least one capability requirement of the first AI model. In this way, input of an AI model can match a capability requirement of the AI model, so that the input of the AI model is more appropriate, and a performance loss caused by using inappropriate channel information as the input of the AI model is avoided.

## Description

This application claims priority to Chinese Patent Application No. 202310830758.7, filed with the China National Intellectual Property Administration on July 6, 2023 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

With development of wireless communication technologies, to support more services and meet higher requirements on indicators such as a system capacity and a communication latency, antenna arrays have continuously growing scales, and support increasingly more frequency bands. As a result, a communication system becomes more complex. Improving performance of a complex communication system by using an artificial intelligence (artificial intelligence, AI) method has become an important research direction. For example, application values of AI in many wireless communication technologies such as channel state information (channel state information, CSI) feedback, beam management, and pilot design and management are continually revealed.

In wireless communication, a channel usually changes continuously in time. Therefore, communication performance may be improved by mining channel time-domain correlation. If an AI model is used in wireless communication, how to effectively improve performance of the AI model by using channel time-domain correlation is a problem that needs to be considered.

### SUMMARY

This application provides a communication method and apparatus, to improve performance of an AI model.

According to a first aspect, a communication method is provided. The method may be performed by a communication apparatus. The communication apparatus may be a terminal device, or may be a chip or a circuit used in a terminal device, or may be a network device, or may be a chip or a circuit used in a network device, or may be an AI node, or may be a chip or a circuit used in an AI node. This is not limited in this application.

The method may include: determining at least two pieces of channel information, where the at least two pieces of channel information include first channel information and second channel information, and the first channel information is obtained before the second channel information; and determining input of a first artificial intelligence AI model or determining a second AI model based on a time interval between channel obtaining time corresponding to the first channel information and channel obtaining time corresponding to the second channel information and at least one capability requirement of the first AI model.

Based on the foregoing technical solution, the input of the first AI model is determined or the second AI model is determined based on the time interval between the channel obtaining time corresponding to the channel information and the at least one capability requirement of the first AI model, so that the input of the first AI model can match a capability requirement of the first AI model, the input of the first AI model is more appropriate, and a performance loss caused by using inappropriate channel information as the input of the first AI model is avoided. In addition, when it is determined, based on the time interval between the channel obtaining time corresponding to the first channel information and the channel obtaining time corresponding to the second channel information and the at least one capability requirement of the first AI model, that the first AI model is inappropriate, the second AI model may be further determined, and the second AI model may continue to be used to perform a related operation, thereby avoiding a performance loss caused by processing channel information by using the inappropriate AI model.

With reference to the first aspect, in some implementations of the first aspect, the determining the input of the first AI model or determining the second AI model based on the time interval between the channel obtaining time corresponding to the first channel information and the channel obtaining time corresponding to the second channel information and the at least one capability requirement of the first AI model includes any one of the following: determining the second AI model when determining that the time interval between the channel obtaining time corresponding to the first channel information and the channel obtaining time corresponding to the second channel information does not meet a first capability requirement of the first AI model, where input of the second AI model includes the at least two pieces of channel information; or determining the second AI model when determining that the time interval between the channel obtaining time corresponding to the first channel information and the channel obtaining time corresponding to the second channel information does not meet the first capability requirement of the first AI model, where the input of the second AI model includes the second channel information, and state information of the second AI model is a default value; or when determining that the time interval between the channel obtaining time corresponding to the first channel information and the channel obtaining time corresponding to the second channel information does not meet a second capability requirement of the first AI model, determining that the input of the first AI model includes M of the at least two pieces of channel information and X default values, where the M pieces of channel information do not include the first channel information, M is an integer greater than or equal to 1, and X is an integer greater than or equal to 0; or when determining that the time interval between the channel obtaining time corresponding to the first channel information and the channel obtaining time corresponding to the second channel information does not meet the second capability requirement of the first AI model, determining that the input of the first AI model includes the second channel information, and state information of the first AI model is the default value.

Optionally, when it is determined that the time interval between the channel obtaining time corresponding to the first channel information and the channel obtaining time corresponding to the second channel information meets the first capability requirement of the first AI model, the input of the first AI model is determined, that is, the AI model is not switched. The input of the first AI model may include M of the at least two pieces of channel information and X default values, or may include the at least two pieces of channel information, or may include the second channel information, where state information of the first AI model is a default value.

Optionally, when it is determined that the time interval between the channel obtaining time corresponding to the first channel information and the channel obtaining time corresponding to the second channel information meets the second capability requirement of the first AI model, it is determined that the input of the first AI model includes the at least two pieces of channel information, or it is determined that the input of the first AI model includes the second channel information and state information of the first AI model. The state information of the first AI model may be determined based on previous output of the first AI model.

Based on the foregoing technical solution, different operations may be performed based on different capability requirements of the first AI model. In this way, not only performance of an AI model can be improved by using an appropriate AI model or appropriate input of the AI model, but also different rules can be selected based on functions of the AI model.

With reference to the first aspect, in some implementations of the first aspect, the determining the at least two pieces of channel information includes: receiving reference signals, and performing measurement based on the reference signals to obtain the at least two pieces of channel information.

With reference to the first aspect, in some implementations of the first aspect, the channel obtaining time corresponding to the first channel information is determined based on receiving time or sending time of a reference signal used to obtain the first channel information through measurement, or is determined based on reporting time of the first channel information; and the channel obtaining time corresponding to the second channel information is determined based on receiving time or sending time of a reference signal used to obtain the second channel information through measurement, or is determined based on reporting time of the second channel information.

Based on the foregoing technical solution, the channel obtaining time corresponding to the channel information can be aligned between a network side and a terminal side, so that a network device and a terminal device can have consistent determining results when determining the input of the first AI model or determining the second AI model based on the time interval between the channel obtaining time corresponding to the channel information and the at least one capability requirement of the first AI model, thereby ensuring symmetric behavior on the network side and the terminal side.

With reference to the first aspect, in some implementations of the first aspect, the reference signal is periodic, and the time interval between the channel obtaining time corresponding to the first channel information and the channel obtaining time corresponding to the second channel information is determined based on a periodicity of the reference signal.

That the reference signal is periodic indicates that time domain behavior of the reference signal is periodic, that is, the reference signal is periodically transmitted.

Optionally, the time interval between the channel obtaining time corresponding to the first channel information and the channel obtaining time corresponding to the second channel information is k*Y. Y represents the periodicity of the reference signal, and k represents a quantity of pieces of channel information between the first channel information and the second channel information.

With reference to the first aspect, in some implementations of the first aspect, the reference signal is semi-persistent, and the time interval between the channel obtaining time corresponding to the first channel information and the channel obtaining time corresponding to the second channel information is determined based on a time interval between activation signaling and deactivation signaling. The activation signaling is used to activate the reference signal used to obtain the second channel information through measurement, and the deactivation signaling is used to deactivate the reference signal used to obtain the first channel information through measurement; or the activation signaling is used to activate reporting of the second channel information, and the deactivation signaling is used to deactivate reporting of the first channel information.

That the reference signal is semi-persistent indicates that time domain behavior of the reference signal is semi-persistent. For the semi-persistent and the activation signaling and the deactivation signaling that are related to the semi-persistent, refer to descriptions in the following embodiments. Details are not described herein.

Optionally, the time interval between the channel obtaining time corresponding to the first channel information and the channel obtaining time corresponding to the second channel information is S+P+Δ. S represents a time interval between the receiving time or the sending time of the reference signal used to obtain the first channel information through measurement and current deactivation signaling, P represents a time interval between the receiving time or the sending time of the reference signal used to obtain the second channel information through measurement and current activation signaling, and Δ represents a time interval between the deactivation signaling and the activation signaling. Alternatively, S represents a time interval between the reporting time of the first channel information and current deactivation signaling, P represents a time interval between the reporting time of the second channel information and current activation signaling, and Δ represents a time interval between the deactivation signaling and the activation signaling.

It may be understood that the foregoing descriptions are example descriptions, and constitute no limitation. For example, if the first channel information and the second channel information are in a same activation time period, the first channel information and the second channel information may alternatively be determined based on a periodicity of the reference signal in the activation time period.

With reference to the first aspect, in some implementations of the first aspect, the determining the input of the first AI model or determining the second AI model based on the time interval between the channel obtaining time corresponding to the first channel information and the channel obtaining time corresponding to the second channel information and the at least one capability requirement of the first AI model includes: determining the second AI model when determining that the time interval between the channel obtaining time corresponding to the first channel information and the channel obtaining time corresponding to the second channel information does not meet a first capability requirement of the first AI model, where input of the second AI model includes feedback information of the at least two pieces of channel information; or determining the second AI model when determining that the time interval between the channel obtaining time corresponding to the first channel information and the channel obtaining time corresponding to the second channel information does not meet the first capability requirement of the first AI model, where the input of the second AI model includes feedback information of the second channel information, and state information of the second AI model is a default value; or when determining that the time interval between the channel obtaining time corresponding to the first channel information and the channel obtaining time corresponding to the second channel information does not meet a second capability requirement of the first AI model, determining that the input of the first AI model includes feedback information of M of the at least two pieces of channel information and X default values, where the M pieces of channel information do not include the first channel information, M is an integer greater than or equal to 1, and X is an integer greater than or equal to 0; or when determining that the time interval between the channel obtaining time corresponding to the first channel information and the channel obtaining time corresponding to the second channel information does not meet the second capability requirement of the first AI model, determining that the input of the first AI model includes the feedback information of the second channel information, and state information of the first AI model is the default value.

Optionally, the feedback information may be feedback information output by an encoder on a terminal side, or may be obtained by processing output of the encoder, for example, coarse-precision channel information restored by using a decoder.

Based on the foregoing technical solution, different operations may be performed based on different capability requirements of the first AI model. In this way, not only performance of an AI model can be improved by using an appropriate AI model or appropriate input of the AI model, but also different rules can be selected based on functions of the AI model.

With reference to the first aspect, in some implementations of the first aspect, the determining the at least two pieces of channel information includes: sending reference signals, receiving the feedback information of the at least two pieces of channel information, and obtaining the at least two pieces of channel information based on the feedback information of the at least two pieces of channel information, where the channel obtaining time corresponding to the first channel information is determined based on sending time of a reference signal used to obtain the first channel information through measurement, or is determined based on reporting time of the first channel information; and the channel obtaining time corresponding to the second channel information is determined based on sending time of a reference signal used to obtain the second channel information through measurement, or is determined based on reporting time of the second channel information.

Based on the foregoing technical solution, the channel obtaining time corresponding to the channel information can be aligned between a network side and a terminal side, so that a network device and a terminal device can have consistent determining results when determining the input of the first AI model or determining the second AI model based on the time interval between the channel obtaining time corresponding to the channel information and the at least one capability requirement of the first AI model, thereby ensuring symmetric behavior on the network side and the terminal side.

With reference to the first aspect, in some implementations of the first aspect, the M pieces of channel information further do not include channel information before the first channel information, or the M pieces of channel information further do not include channel information before the second channel information.

Based on the foregoing technical solution, considering that the time interval between the channel obtaining time corresponding to the first channel information and the channel obtaining time corresponding to the second channel information does not meet the second capability requirement of the first AI model, it may be considered by default that a time interval between the channel information (denoted as channel information #1 for differentiation) obtained before the first channel information or the channel information (denoted as channel information #2 for differentiation) obtained before the second channel information and the channel obtaining time corresponding to the second channel information does not meet the second capability requirement of the first AI model, either. This reduces overheads caused by determining whether the time interval between the channel information #1 or the channel information #2 and the channel obtaining time corresponding to the second channel information meets the second capability requirement of the first AI model.

With reference to the first aspect, in some implementations of the first aspect, the first capability requirement of the first AI model is that a time interval between channel obtaining time is within a first value range; and/or the second capability requirement of the first AI model is that a time interval between channel obtaining time is within a second value range.

With reference to the first aspect, in some implementations of the first aspect, the first value range is less than or equal to T1; and/or the second value range is less than or equal to T2. T1 is a maximum value of the time interval that is between channel obtaining time and that corresponds to the first capability requirement of the first AI model, and T2 is a maximum value of the time interval that is between channel obtaining time and that corresponds to the second capability requirement of the first AI model.

With reference to the first aspect, in some implementations of the first aspect, a value of T1 and/or a value of T2 are/is determined in any one of the following manners: being determined by a network device, being determined by a terminal device, or being predefined.

With reference to the first aspect, in some implementations of the first aspect, the method further includes: obtaining first indication information, where the first indication information indicates the at least one capability requirement of the first AI model.

Optionally, the obtaining the first indication information includes: receiving the first indication information, or determining the first indication information.

Based on the foregoing technical solution, the communication apparatus may obtain the at least one capability requirement of the first AI model. For example, the communication apparatus receives the first indication information sent by another apparatus. Correspondingly, the another apparatus sends the first indication information to the communication apparatus. For example, the another apparatus may be a network-side device or a chip or a circuit used in the network-side device. The network-side device may be, for example, an access network device, or may be a core network device. This is not limited. For another example, the communication apparatus may determine the at least one capability requirement of the first AI model.

With reference to the first aspect, in some implementations of the first aspect, the first channel information is any one of the at least two pieces of channel information other than the second channel information, or the first channel information and the second channel information are separated by k pieces of channel information, where k is an integer greater than or equal to 1.

With reference to the first aspect, in some implementations of the first aspect, the method further includes: obtaining second indication information, where the second indication information indicates k.

Optionally, the obtaining second indication information includes: receiving the second indication information, or determining the second indication information.

Based on the foregoing technical solution, the communication apparatus may obtain k. For example, the communication apparatus receives the second indication information sent by another apparatus. The second indication information indicates k. Correspondingly, the another apparatus sends the second indication information to the communication apparatus. For example, the another apparatus may be a network-side device or a chip or a circuit used in the network-side device. The network-side device may be, for example, an access network device, or may be a core network device. This is not limited. For another example, the communication apparatus may determine k.

According to a second aspect, a communication apparatus is provided. The apparatus is configured to perform the method according to the first aspect. Specifically, the apparatus may include a unit and/or a module configured to perform the method according to any one of the implementations of the first aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a third aspect, a communication apparatus is provided. The apparatus includes: a memory, configured to store a program; and at least one processor, configured to execute a computer program or instructions stored in the memory, to perform the method according to any one of the implementations of the first aspect.

In an implementation, the apparatus is a communication device (for example, a terminal device or a network device).

In another implementation, the apparatus is a chip, a chip system, or a circuit used in a communication device.

According to a fourth aspect, this application provides a processor, configured to perform the method according to the foregoing aspects.

Operations such as sending and obtaining/receiving related to the processor may be understood as operations such as outputting and inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a fifth aspect, a computer-readable storage medium is provided. The computer-readable medium stores program code for execution by a device, and the program code includes instructions for performing the method according to any one of the implementations of the first aspect.

According to a sixth aspect, a computer program product including instructions is provided. When the computer program product is run on a computer, the computer is enabled to perform the method according to any one of the implementations of the first aspect.

According to a seventh aspect, a chip is provided. The chip includes a processor and a communication interface, and the processor reads, via the communication interface, instructions stored in a memory, to perform the method according to any one of the implementations of the first aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations of the first aspect.

### BRIEF DESCRIPTION OF DRAWINGS

FIG. 1A and FIG. 1B are diagrams of wireless communication systems suitable for embodiments of this application;
FIG. 2 is a diagram of processing channel information by using an AI model;
FIG. 3 is a diagram of a communication method 300 according to an embodiment of this application;
FIG. 4 is a schematic flowchart of a communication method 400 according to an embodiment of this application;
FIG. 5 is a diagram of a semi-persistent CSI reporting manner;
FIG. 6 is a schematic flowchart of a communication method 600 according to another embodiment of this application;
FIG. 7 is a schematic flowchart of a communication method 700 according to another embodiment of this application;
FIG. 8 is a block diagram of a communication apparatus 800 according to an embodiment of this application;
FIG. 9 is a diagram of another communication apparatus 900 according to an embodiment of this application; and
FIG. 10 is a diagram of a chip system 1000 according to an embodiment of this application.

### DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet-of-things (internet-of-things, IoT) communication system, or another communication system.

A network element in a communication system may send a signal to another network element or receive a signal from another network element. The signal may include information, signaling, data, or the like. The network element may be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It may be understood that in this disclosure, the terminal device may be replaced with a first network element, the network device may be replaced with a second network element, and the two perform a corresponding communication method in this disclosure. Alternatively, a corresponding communication method in this disclosure may be applied between network devices or between terminal devices. This is not limited herein.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

For example rather than limitation, in embodiments of this application, the terminal device may alternatively be a wearable device. The wearable device may also be referred to as a wearable intelligent device, and is a general term for devices that can be worn and that are developed by intelligently designing everyday wearing by applying a wearable technology, such as glasses, gloves, watches, clothing, and shoes. The wearable device is a portable device that can be directly worn on the body or integrated onto user clothes or accessories. The wearable device is not only a hardware device, but also implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on a specific type of application function and need to collaboratively work with other devices such as smartphones, for example, various smart bands or smart jewelry for monitoring physical signs.

It should be understood that, in some scenarios, the UE may be further configured to serve as a base station. For example, the UE may serve as a scheduling entity that provides a sidelink signal between UEs in V2X, D2D, P2P, or other scenarios.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names: a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, or M2M communication, a network-side device in a 6G network, a device that bears a base station function in a future communication system, or the like. The base station may support networks using a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs with different functions respectively. If a fronthaul interface between the DU and the RU is a common public radio interface (common public radio interface, CPRI), the DU is configured to implement one or more of baseband functions, and the RU is configured to implement one or more of radio frequency functions. If the fronthaul interface between the DU and the RU is an enhanced common public radio interface (enhanced common public radio interface, eCPRI), different from the implementation of the CPRI, a part of downlink baseband functions and/or uplink baseband functions are migrated from the DU to the RU for implementation. Different manners of splitting between the DU and the RU correspond to different categories (category, Cat) of eCPRIs, for example, eCPRI Cat A, Cat B, Cat C, Cat D, Cat E, and Cat F.

The eCPRI Cat A is used as an example. For downlink transmission, splitting is performed at layer mapping. The DU is configured to implement the layer mapping and one or more functions before the layer mapping (that is, one or more of encoding, rate matching, scrambling, modulation, or the layer mapping), while other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are migrated to the RU for implementation. For uplink transmission, splitting is performed at RE demapping. The DU is configured to implement the demapping and one or more functions before the demapping (that is, one or more functions of decoding, rate dematching, descrambling, demodulation, inverse discrete Fourier transform (inverse discrete Fourier transform, IDFT), channel equalization, or the RE demapping), while other functions (for example, one or more of digital BF or fast Fourier transform (FFT)/CP removal) after the demapping are migrated to the RU for implementation. It may be understood that, for function descriptions of DUs and RUs corresponding to various categories of eCPRIs, refer to the eCPRI specification. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete component. In embodiments of this application, an example in which the apparatus for implementing the function of the network device is the network device is merely used for description, and constitutes no limitation on the solutions in embodiments of this application.

The network device and the terminal device may be deployed on land, including an indoor or outdoor device, a handheld device, or a vehicle-mounted device; or may be deployed on a water surface; or may be deployed on an airplane, a balloon, or a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In addition, to support an AI technology in the wireless network, an AI node may be further introduced into the network.

Optionally, the AI node may be deployed at one or more of the following positions in the communication system: the access network device, the terminal device, a core network device, or the like. Alternatively, the AI node may be independently deployed, for example, deployed at a position other than any one of the foregoing devices, for example, a host or a cloud server in an over-the-top (over-the-top, OTT) system. The AI node may communicate with other devices in the communication system. The other devices may be, for example, one or more of the following: the network device, the terminal device, a network element of a core network, or the like.

It may be understood that a quantity of AI nodes is not limited in this application. For example, when there are a plurality of AI nodes, the plurality of AI nodes may be obtained through division based on functions. For example, different AI nodes are responsible for different functions.

It may be further understood that the AI nodes may be devices independent of each other, or may be integrated into a same device to implement different functions, or may be network elements in a hardware device, or may be software functions running on dedicated hardware, or may be virtualized functions instantiated on a platform (for example, a cloud platform). Specific forms of the AI nodes are not limited in this application.

The AI node may be an AI network element or an AI module.

Communication systems suitable for embodiments of this application are first briefly described below.

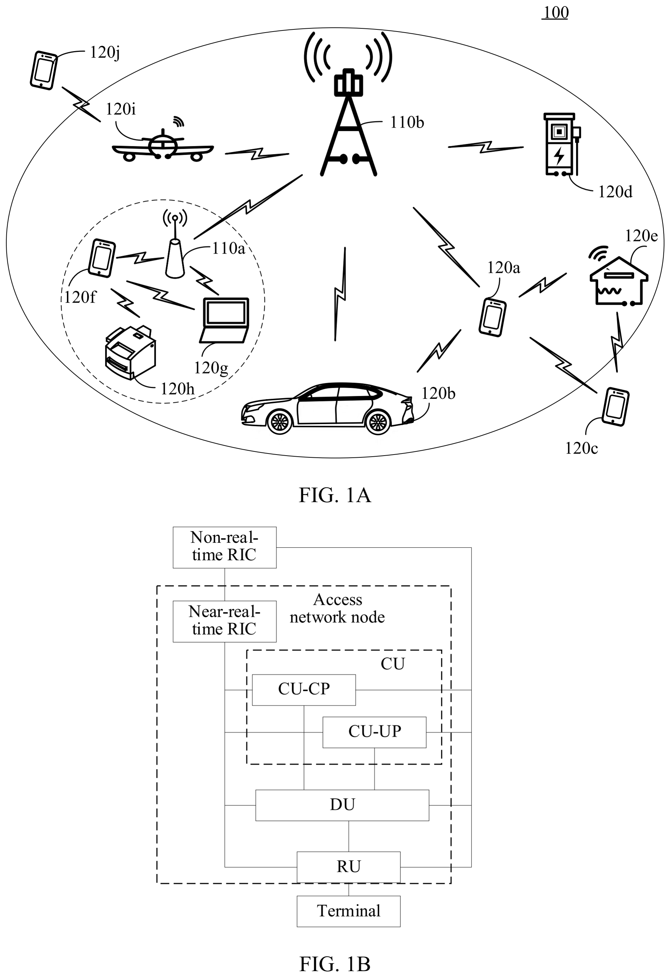

FIG. 1A and FIG. 1B are diagrams of wireless communication systems suitable for embodiments of this application.

As shown in FIG. 1A, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 120) may be interconnected or connected to one or more network devices (110a and 110b, collectively referred to as 110) in the radio access network 100. Network elements in the wireless communication system are connected by using an interface (for example, NG or Xn) or an air interface. In addition, one or more AI modules may be disposed in each network element in the wireless communication system. AI modules deployed in different network elements may be the same or different.

FIG. 1A is merely a diagram. The wireless communication system may further include another device, for example, may further include a core network device, a wireless relay device, a wireless backhaul device, and/or the like not shown in FIG. 1A.

As shown in FIG. 1B, the wireless communication system includes a RAN intelligent controller (RAN intelligent controller, RIC). For example, the RIC may be configured to implement AI-related functions. For example, the RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be seconds. The real-time RIC mainly processes near-real-time information, for example, latency-sensitive data. A latency of the data is tens of milliseconds.

The near-real-time RIC is configured to perform model training and inference, for example, configured to train an AI model and perform inference by using the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be transmitted between the CU and the DU and/or between the DU and the RU. For example, the near-real-time RIC delivers the inference result to the DU, and the DU sends the inference result to the RU.

The non-real-time RIC is also configured to perform model training and inference, for example, configured to train an AI model and perform inference by using the model. The non-real-time RIC may obtain network-side information and/or terminal-side information from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be transmitted between the CU and the DU and/or between the DU and the RU. For example, the non-real-time RIC delivers the inference result to the DU, and the DU sends the inference result to the RU.

The near-real-time RIC or the non-real-time RIC each may alternatively be independently deployed as a network element. Optionally, the near-real-time RIC or the non-real-time RIC may alternatively be used as a part of another device. For example, the near-real-time RIC is deployed in a RAN node (for example, a CU or a DU), while the non-real-time RIC is deployed in an OAM, a cloud server, a core network device, or another network device.

In actual application, the wireless communication system may include a plurality of network devices (also referred to as access network devices), and may include a plurality of terminal devices. This is not limited. One network device may serve one or more terminal devices. One terminal device may access one or more network devices. Quantities of terminal devices and network devices included in the wireless communication system are not limited in embodiments of this application.

For ease of understanding embodiments of this application, the following first briefly describes terms in embodiments of this application.
1. Artificial intelligence: It enables machines to learn and accumulate experience, to resolve problems such as natural language understanding, image recognition, and chess playing that can be resolved by humans through experience. The artificial intelligence may be understood as intelligence represented by machines manufactured by people. Generally, the artificial intelligence is a technology of presenting human intelligence by using a computer program. An objective of the artificial intelligence includes understanding intelligence by building symbolic reasoning or computer programs for reasoning.
2. Machine learning (machine learning): It is an implementation of artificial intelligence. The machine learning is a method of enabling machines to learn, so that the machines can implement functions that cannot be implemented through direct programming. In practice, the machine learning is a method of training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm of automatically analyzing data to obtain a rule and predicting unknown data by using the rule.
3. Neural network: It is a specific embodiment of a machine learning method. The neural network is a mathematical model that imitates animal neural network behavior features for information processing. The idea of the neural network comes from a neuron structure of brain tissue. Each neuron may perform a weighted summation operation on input values of the neuron, and generates output based on a result of the weighted summation operation by using an activation function.

The neural network usually includes a plurality of layers of structures, and each layer may include one or more logical determining units. The logical determining unit may be referred to as a neuron (neuron). An expression capability of the neural network may be improved by increasing a depth and/or a width of the neural network, to provide more powerful information extraction and abstraction modeling capabilities for a complex system. The depth of the neural network may be understood as a quantity of layers included in the neural network, and a quantity of neurons included in each layer may be referred to as a width of the layer. In a possible implementation, the neural network includes an input layer and an output layer. The input layer of the neural network processes received input by using a neuron, and then transfers a result to the output layer, and the output layer obtains an output result of the neural network. In another possible implementation, the neural network includes an input layer, a hidden layer, and an output layer. The input layer of the neural network processes received input by using a neuron, and then transfers a result to an intermediate hidden layer. The hidden layer then transfers a computing result to the output layer or an adjacent hidden layer. Finally, the output layer obtains an output result of the neural network. One neural network may include one hidden layer or a plurality of sequentially connected hidden layers. This is not limited.

A loss function may be defined in a process of training the neural network. The loss function is used to measure a difference between a value predicted by the model and an actual value. In the process of training the neural network, the loss function describes a gap or a difference between an output value of the neural network and an ideal target value. The process of training the neural network is a process of adjusting a neural network parameter so that a value of the loss function is less than a threshold or meets a target requirement. The neural network parameter may include at least one of the following: the quantity of layers of the neural network, the width of the neural network, a weight of a neuron, or a parameter in an activation function of the neuron.
4. Deep neural network (deep neural network): It is a neural network having a plurality of hidden layers.
5. Deep learning (deep learning): It is machine learning performed based on a deep neural network.
6. AI model: It is an algorithm or a computer program that can implement an AI function. The AI model represents a mapping relationship between input and output of the model. In other words, the AI model is a function model that maps input in a dimension to output in a dimension. A parameter of the function model may be obtained through machine learning and training. For example, f(x)=ax²+b is a quadratic function model, and may be considered as an AI model, a and b are parameters of the AI model, and a and b may be obtained through machine learning and training. For example, an AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

Design of the AI model mainly includes a data collection phase (for example, collection of training data and/or inference data), a model training phase, and a model inference phase, and may further include an inference result application phase. In the data collection phase, a data source (data source) is used to provide a training data set and inference data. In the model training phase, an AI model is obtained through analysis or training by using training data (training data) provided by the data source. Obtaining the AI model through learning by using a model training host is equivalent to obtaining a mapping relationship between input and output of the AI model through learning by using the training data. In the model inference phase, the AI model trained in the model training phase is used to perform inference based on the inference data provided by the data source, to obtain an inference result. This phase may also be understood as inputting the inference data into the AI model and obtaining output by using the AI model. The output is the inference result. The inference result may indicate a configuration parameter used (executed) by an actor object, and/or an operation performed by the actor object. The inference result is released in the inference result application phase. For example, the inference result may be centrally planned by an actor (actor) entity. For example, the actor entity may send the inference result to one or more actor objects (for example, a core network device, an access network device, or a terminal device) for execution. For another example, the actor entity may further feed back performance of the AI model to the data source, to facilitate subsequent update training of the AI model.

It may be understood that the AI model may be implemented by using a hardware circuit, software, or a combination of software and hardware. This is not limited. A non-limitative example of the software includes program code, a program, a subprogram, an instruction, an instruction set, code, a code segment, a software module, an application program, a software application program, or the like.

In addition, an encoder may have a plurality of AI models deployed, so that the encoder may perform encoding based on the deployed AI models, for example, compress channel information. A decoder may have a plurality of AI models deployed, so that the decoder may perform decoding based on the deployed AI models, for example, restore compressed information to obtain channel information. In the following descriptions, for brevity, the AI model deployed in the encoder is referred to as an AI model of the encoder, and the AI model deployed in the decoder is referred to as an AI model of the decoder.

In addition, in embodiments of this application, the encoder and the decoder may be communication devices (for example, a terminal device or a network device) or may be disposed in communication devices. In embodiments of this application, an example in which the encoder and the decoder are communication devices is mainly used for description. The encoder is a terminal device, and the decoder is a network device. Alternatively, the encoder is a terminal device, and the decoder is another terminal device. Alternatively, the encoder is a network device, and the decoder is another network device. Alternatively, the encoder is a network device, and the decoder is a terminal device. This is not limited. Embodiments of this application are mainly described by using an example in which the encoder is a terminal device and the decoder is a network device.

In addition, in embodiments of this application, a function of the AI model is not limited. For example, the function of the AI model includes at least one of the following: channel state information (channel state information, CSI) feedback, CSI prediction, positioning, beam management, beam prediction, or the like.
7. Model training: It is a process of training a model parameter by selecting an appropriate loss function and using an optimization algorithm, so that a value of the loss function is less than a threshold, or the value of the loss function meets a target requirement.
8. Model application: It is to resolve a practical problem by using a trained model.

In wireless communication, a channel generally changes continuously in time. Therefore, communication performance may be improved by mining channel time-domain correlation. For example, channel prediction may be implemented by mining the channel time-domain correlation, to overcome a problem of channel aging. For another example, channel information compression may be implemented by mining the channel time-domain correlation, to reduce overheads of feeding back channel information. For another example, an optimal beam may be predicted by mining the channel time-domain correlation. The channel time-domain correlation is mined due to a slow-changing characteristic of the channel in time domain. Channel measurement is used as an example. If a channel change speed is slower relative to a channel measurement periodicity, the channel time-domain correlation is strong. In this case, a performance gain may be achieved by mining the channel time-domain correlation. If the channel change speed is faster relative to the channel measurement periodicity, the channel time-domain correlation is weakened. In this case, the performance gain may fail to be achieved by mining the channel time-domain correlation.

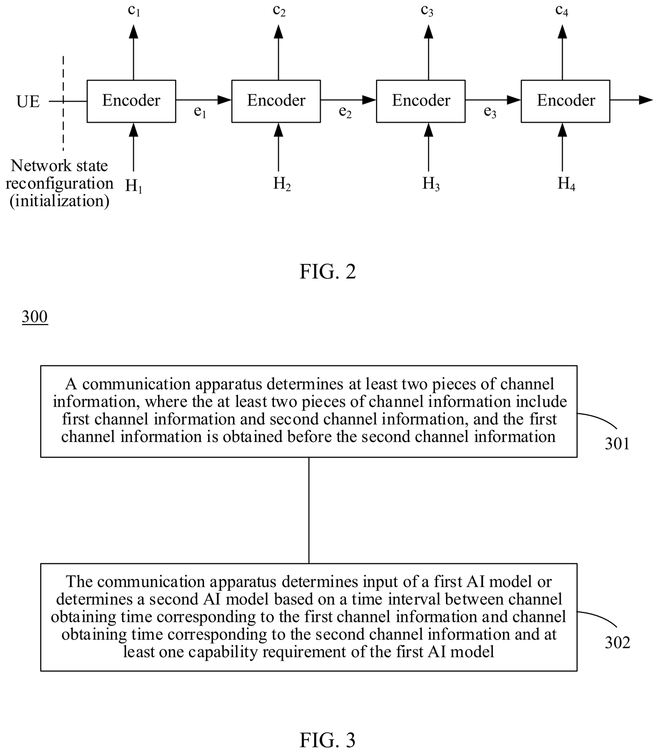

FIG. 2 is a diagram of processing channel information by using an AI model. In the example shown in FIG. 2, an encoder may have at least one AI model deployed, so that the encoder may perform encoding based on the deployed AI model, for example, process channel information input into the encoder. Hₜ represents latest channel information obtained by the encoder, eₜ₋₁ represents historical channel information (which may also be referred to as state information of the encoder) obtained by the encoder, and eₜ₋₁ is related to at least one piece of channel information in {Hₜ₋₁, Hₜ₋₂, Hₜ₋₃, ...}. Input of the AI model deployed in the encoder or used as the encoder includes eₜ₋₁ and Hₜ, and output of the AI model is cₜ and eₜ. eₜ is updated encoder state information, and may be used as next input of the encoder. If a time interval between channel obtaining time of the latest channel information and channel obtaining time of the historical channel information is large, channel time-domain correlation is weakened, and the AI model cannot obtain better model output by using the historical channel information.

In view of this, this application proposes that when an AI model is used to process a plurality of pieces of channel information (for example, latest channel information and historical channel information), a time interval between channel obtaining time corresponding to channel information is considered, so that appropriate historical channel information can be selected for processing, and a performance loss caused by using outdated historical channel information as model input can be avoided.

It should be noted that in this application, "indicate" may include direct indication, indirect indication, explicit indication, and implicit indication. When a piece of indication information indicates A, it may be understood as that the indication information carries A, directly indicates A, or indirectly indicates A.

In this application, information indicated by the indication information is referred to as to-be-indicated information. In a specific implementation process, the to-be-indicated information may be indicated in many manners, for example but not limited to the following manners: The to-be-indicated information may be directly indicated. For example, the to-be-indicated information, an index of the to-be-indicated information, or the like is indicated. Alternatively, the to-be-indicated information may be indirectly indicated by indicating other information, where there is an association relationship between the other information and the to-be-indicated information. Alternatively, only a part of the to-be-indicated information may be indicated, while another part of the to-be-indicated information is known or pre-agreed on. For example, specific information may be indicated by using an arrangement sequence, agreed on in advance (for example, stipulated in a protocol), of pieces of information, to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

The following describes, in detail with reference to accompanying drawings, a communication method provided in embodiments of this application. Embodiments provided in this application may be applied to the communication system shown in FIG. 1A or FIG. 1B. This is not limited.

FIG. 3 is a diagram of a communication method 300 according to an embodiment of this application. For ease of description, the following provides example descriptions by using an example in which the method 300 is performed by a communication apparatus. It may be understood that the communication apparatus may be a terminal device or a component (for example, a chip or a circuit) of a terminal device, or the communication apparatus may be a network device or a component (for example, a chip or a circuit) of a network device, or the communication apparatus may be an AI node or a component (for example, a chip or a circuit) of an AI node. This is not limited. The method 300 shown in FIG. 3 may include the following steps.

301: The communication apparatus determines at least two pieces of channel information, where the at least two pieces of channel information include first channel information and second channel information, and the first channel information is obtained before the second channel information.

Channel information may be obtained through channel measurement based on a reference signal. Correspondingly, the at least two pieces of channel information may be obtained through channel measurement based on at least two reference signals, and each piece of channel information corresponds to one time of reference signal measurement. For example, the reference signal is a channel state information reference signal (channel state information reference signal, CSI-RS).

That the first channel information is obtained before the second channel information indicates that time at which the first channel information is obtained through measurement is earlier than time at which the second channel information is obtained through measurement. For example, at a first moment, the channel is measured based on a reference signal to obtain the first channel information; and at a second moment, the channel is measured based on a reference signal to obtain the second channel information, where the first moment is earlier than the second moment. In other words, the first channel information and the second channel information reflect information about the channel at different time, and the first channel information reflects information about the channel at earlier time.

In a possible case, the communication apparatus is a terminal device, that is, the method 300 is performed by the terminal device. In this case, optionally, that the communication apparatus determines the at least two pieces of channel information in step 301 includes: The terminal device receives the reference signals from a network device, and performs measurement based on the reference signals to obtain the at least two pieces of channel information.

In another possible case, the communication apparatus is a network device, that is, the method 300 is performed by the network device. In this case, optionally, that the communication apparatus determines the at least two pieces of channel information in step 301 includes: The network device receives feedback information of the at least two pieces of channel information from a terminal device, and obtains the at least two pieces of channel information based on the feedback information of the at least two pieces of channel information.

302: The communication apparatus determines input of a first AI model or determines a second AI model based on a time interval between channel obtaining time corresponding to the first channel information and channel obtaining time corresponding to the second channel information and at least one capability requirement of the first AI model.

In this embodiment of this application, the communication apparatus determines the input of the first AI model or determines the second AI model based on the time interval between the channel obtaining time corresponding to the channel information and the at least one capability requirement of the first AI model, so that the input of the first AI model can match a capability requirement of the first AI model, the input of the first AI model is more appropriate, and a performance loss caused by using inappropriate channel information as the input of the first AI model is avoided. In addition, when it is determined, based on the time interval between the channel obtaining time corresponding to the first channel information and the channel obtaining time corresponding to the second channel information and the at least one capability requirement of the first AI model, that the first AI model is inappropriate, the second AI model may be further determined, and the second AI model may continue to be used to perform a related operation, thereby avoiding a performance loss caused by processing channel information by using the inappropriate AI model.

The first AI model may represent an original AI model, and the second AI model may represent a switched AI model. In other words, the second AI model is an AI model whose capability requirements are not completely the same as those of the first AI model, that is, the second AI model have at least one capability requirement different from that of the first AI model. It may be understood that the second AI model may have a plurality of structures. In this embodiment of this application, for differentiation, AI models whose capability requirements are not completely the same as those of the first AI model are all referred to as the second AI model.

For example, the capability requirement of the AI model is a capability requirement related to a time interval supported by the AI model between channel obtaining time. The capability requirement of the AI model may be used by the communication apparatus to determine whether to switch from the first AI model to the second AI model, or may be used by the communication apparatus to determine the input of the first AI model. The capability requirement of the AI model may also be referred to as a working condition of the AI model or a state condition of the AI model, and a name of the capability requirement of the AI model does not limit the protection scope of embodiments of this application.

In this embodiment of this application, a function of the AI model is not limited. For example, the function of the AI model includes at least one of the following: channel state information (channel state information, CSI) feedback (or channel feedback), CSI prediction (or channel prediction), positioning, beam management, beam prediction, or the like.

For example, the channel obtaining time corresponding to the channel information may be determined based on receiving time or sending time of a reference signal used to obtain the channel information through measurement, or may be determined based on reporting time of the channel information. The first channel information is used as an example. Assuming that the first channel information is obtained through channel measurement on a reference signal (referred to as a first reference signal for differentiation), the channel obtaining time corresponding to the first channel information may be determined based on receiving time or sending time of the first reference signal, or the channel obtaining time corresponding to the first channel information may be determined based on reporting time of the first channel information. For example, the reporting time of the first channel information may be reporting time of feedback information of the first channel information. Other channel information in the at least two pieces of channel information is similar thereto, and details are not described herein again.

In a first possible implementation, the channel obtaining time corresponding to the channel information is equal to the receiving time or the sending time of the reference signal used to obtain the channel information through measurement. In this manner, the channel obtaining time corresponding to the channel information can be aligned between a network device and a terminal device, so that the network device and the terminal device can have consistent determining results when determining the input of the first AI model or determining the second AI model based on the time interval between the channel obtaining time corresponding to the channel information and the at least one capability requirement of the first AI model, thereby ensuring symmetric behavior on a network side and a terminal side.

For example, the terminal device receives the first reference signal from the network device, and performs channel measurement based on the first reference signal to obtain the first channel information. Channel obtaining time, determined by the terminal device, of the first channel information is equal to time at which the terminal device receives the first reference signal. Correspondingly, channel obtaining time, determined by the network device, of the first channel information is equal to time at which the network device sends the first reference signal. The communication apparatus may be the terminal device or the network device.

In the foregoing example descriptions, a transmission period of the reference signal may be ignored.

For example, the AI model is used for channel prediction. In this case, input of the AI model is channel information obtained through channel measurement based on a reference signal, the at least two pieces of channel information are obtained through at least two times of reference signal measurement, and each piece of channel information corresponds to one time of reference signal measurement. It is assumed that the at least two pieces of channel information are {*H*_{*t*-*n*}, *H*_{*t*-*n*+1},..., *Hₜ*}, where each Hₘ (m=t-n, ..., t-1, t) corresponds to one time of reference signal measurement, and when *l*<m, delivery time of a reference signal corresponding to Hₘ is later than delivery time of a reference signal corresponding to H*ₗ*, that is, H*ₗ* is obtained before Hₘ. Based on the first possible implementation, channel obtaining time corresponding to Hₘ (m=t, ..., t-n) is equal to the delivery time of the corresponding reference signal.

In a second possible implementation, the channel obtaining time corresponding to the channel information is equal to a sum of the receiving time or the sending time of the reference signal used to obtain the channel information through measurement and a first offset. In this manner, not only the channel obtaining time corresponding to the channel information can be aligned between the network device and the terminal device, but also the transmission period of the reference signal is considered. Specifically, considering the transmission period of the signal, the channel obtaining time that is determined by the terminal device and that corresponds to the channel information may be the receiving time of the reference signal used to obtain the channel information through measurement, and the channel obtaining time that is determined by the network device and that corresponds to the channel information may be the sending time of the reference signal used to obtain the channel information through measurement plus the first offset. In this way, not only the channel obtaining time corresponding to the channel information can be aligned between the network device and the terminal device, but also the transmission period of the reference signal is considered, so that when the transmission period of the reference signal cannot be ignored, the channel obtaining time corresponding to the channel information can still be aligned between the network device and the terminal device by introducing the offset.

For example, a value of the first offset may be predefined in a protocol, prestored, or preconfigured. A specific value of the first offset is not limited.

For example, the AI model is used for channel prediction. In this case, input of the AI model is channel information obtained through channel measurement based on a reference signal, the at least two pieces of channel information are obtained through at least two times of reference signal measurement, and each piece of channel information corresponds to one time of reference signal measurement. It is assumed that the at least two pieces of channel information are {*Hₜ₋ₙ*, *H*_{*t-n*+1},..., *Hₜ*}. Based on the second possible implementation, channel obtaining time corresponding to Hₘ (m=t, ..., t-n) is equal to a sum of delivery time of a corresponding reference signal and the first offset.

For the second possible implementation, refer to the descriptions in the first possible implementation. Details are not described herein again.

It may be understood that the second possible implementation is an example for description, and variants of the second possible implementation also fall within the protection scope of this application. For example, the channel obtaining time corresponding to the channel information is equal to a difference between the receiving time or the sending time of the reference signal used to obtain the channel information through measurement and an offset (for example, denoted as a second offset). Specifically, the channel obtaining time that is determined by the terminal device and that corresponds to the channel information may be a difference between the receiving time of the reference signal used to obtain the channel information through measurement and the second offset, and the channel obtaining time that is determined by the network device and that corresponds to the channel information may be the sending time of the reference signal used to obtain the channel information through measurement. In this way, the channel obtaining time corresponding to the channel information can also be aligned between the network device and the terminal device.

In a third possible implementation, the channel obtaining time corresponding to the channel information is equal to the reporting time of the channel information. The first channel information is used as an example. The channel obtaining time corresponding to the first channel information is equal to the reporting time of the first channel information. In this manner, the channel obtaining time corresponding to the channel information can be aligned between a network device and a terminal device, so that the network device and the terminal device can have consistent determining results when determining the input of the first AI model or determining the second AI model based on the time interval between the channel obtaining time corresponding to the channel information and the at least one capability requirement of the first AI model, thereby ensuring symmetric behavior on a network side and a terminal side.

For example, the terminal device receives the first reference signal from the network device, performs channel measurement based on the first reference signal to obtain the first channel information, and reports the feedback information of the first channel information to the network device. Channel obtaining time, determined by the terminal device, of the first channel information is equal to time at which the terminal device sends the feedback information of the first channel information. Correspondingly, channel obtaining time, determined by the network device, of the first channel information is equal to time at which the network device receives the feedback information of the first channel information. The communication apparatus may be the terminal device or the network device.

In the foregoing two example descriptions, a transmission period of the feedback information of the channel information may be ignored.

For example, the AI model is used for channel feedback. In this case, input of the AI model includes latest channel information Hₜ and a piece of related information e₍ₜ₋₁₎ of a historical channel (e₍ₜ₋₁₎ is related to at least one piece of historical channel information in {H₍ₜ₋₁₎, H₍ₜ₋₂₎, H₍ₜ₋₃₎,...}). Each Hₘ corresponds to one time of channel reporting (information included in Hₘ is reported in the channel reporting, and is used by the network device to perform channel restoration). Based on the third possible implementation, channel obtaining time corresponding to Hₘ is equal to corresponding channel reporting time.

In a fourth possible implementation, the channel obtaining time corresponding to the channel information is equal to a sum of the reporting time of the channel information and a third offset. The first channel information is used as an example. The channel obtaining time corresponding to the first channel information is equal to a sum of the reporting time of the first channel information and the third offset. In this manner, not only the channel obtaining time corresponding to the channel information can be aligned between the network device and the terminal device, but also the transmission period of the feedback information is considered. Specifically, considering the transmission period of the information, the channel obtaining time that is determined by the network device and that corresponds to the channel information is receiving time at which the network device receives the feedback information of the channel information, and the channel obtaining time that is determined by the terminal device and that corresponds to the channel information is sending time at which the terminal device sends the feedback information of the channel information plus the third offset. In this way, not only the channel obtaining time corresponding to the channel information can be aligned between the network device and the terminal device, but also the transmission period of the reference signal is considered, so that when the transmission period of the reference signal cannot be ignored, the channel obtaining time corresponding to the channel information can still be aligned between the network device and the terminal device by introducing the offset.

For example, a value of the third offset may be predefined in a protocol, prestored, or preconfigured. A specific value of the third offset is not limited.

For example, the AI model is used for channel feedback. In this case, input of the AI model includes latest channel information Hₜ and a piece of related information e₍ₜ₋₁₎ of a historical channel (e₍ₜ₋₁₎ is related to at least one piece of historical channel information in {H₍ₜ₋₁₎, H₍ₜ₋₂₎, H₍ₜ₋₃₎,...}). Each Hₘ corresponds to one time of channel reporting (information included in Hₘ is reported in the channel reporting, and is used by the network device to perform channel restoration). Based on the fourth possible implementation, channel obtaining time corresponding to Hₘ is equal to a sum of corresponding channel reporting time and the third offset.

For the fourth possible implementation, refer to the descriptions in the third possible implementation. Details are not described herein again.

It may be understood that the fourth possible implementation is an example for description, and variants of the fourth possible implementation also fall within the protection scope of this application. For example, the channel obtaining time corresponding to the channel information is equal to a difference between the reporting time of the channel information and an offset (for example, denoted as a fourth offset). Specifically, the channel obtaining time that is determined by the network device and that corresponds to the channel information is a difference between the receiving time at which the network device receives the feedback information of the channel information and the fourth offset, and the channel obtaining time that is determined by the terminal device and that corresponds to the channel information is the sending time at which the terminal device sends the feedback information of the channel information.

The foregoing several possible implementations are examples for description, and constitute no limitation. For example, considering that the reference signal may be periodically sent, the channel obtaining time corresponding to the channel information may alternatively be determined based on a periodicity of the reference signal. Specifically, details are described below.

The following describes the solution of step 302 with reference to an example in which the communication apparatus is a terminal device or a network device.

Case 1: The communication apparatus is a terminal device.

In this case, optionally, step 302 includes any one of the following rules.

Rule #1: The communication apparatus determines the second AI model when determining that the time interval between the channel obtaining time corresponding to the first channel information and the channel obtaining time corresponding to the second channel information does not meet a first capability requirement of the first AI model, where input of the second AI model includes the at least two pieces of channel information.

Based on the rule, if the time interval between the channel obtaining time corresponding to the first channel information and the channel obtaining time corresponding to the second channel information does not meet the first capability requirement of the first AI model, the first AI model may be deactivated, and the second AI model may be determined. In this way, when it is determined that the first AI model is inappropriate, the second AI model may be used to perform a related operation, thereby avoiding a performance loss caused by processing the channel information by using the inappropriate AI model.

A manner of determining the second AI model is not limited. The following describes several possible implementations.

In a possible implementation, any one of AI models deployed in the communication apparatus may be selected.

In another possible implementation, an AI model may be selected, based on the time interval between the channel obtaining time corresponding to the first channel information and the channel obtaining time corresponding to the second channel information, from the AI models deployed in the communication apparatus. Specifically, the time interval between the channel obtaining time corresponding to the first channel information and the channel obtaining time corresponding to the second channel information meets a first capability requirement of the AI model.

In another possible implementation, an AI model may be selected, based on the first capability requirement of the first AI model, from the AI models deployed in the communication apparatus. Specifically, a first capability requirement of the selected AI model is lower than the first capability requirement of the first AI model.

The foregoing several possible implementations are examples for description, and embodiments of this application are not limited thereto.

In this embodiment of this application, the first capability requirement of the AI model may be understood as a minimum requirement for using the AI model, that is, if the requirement is not met, the AI model cannot be used.

Optionally, the first capability requirement of the first AI model is that a time interval between channel obtaining time is within a first value range. The time interval between the channel obtaining time may be a time interval between channel obtaining time corresponding to any two pieces of channel information. The first value range may be a range related to one or more values. This is not limited. Further, a higher first capability requirement of the AI model indicates a larger first value range. For example, if the first capability requirement of the first AI model is lower than a first capability requirement of the second AI model, it indicates that the first value range corresponding to the second AI model is greater than a first value range corresponding to the first AI model.

In a possible implementation, the first value range is a range related to one value, and the first value range is less than or equal to T1. Based on this, if the time interval between the channel obtaining time corresponding to the first channel information and the channel obtaining time corresponding to the second channel information is greater than T1, the communication apparatus determines the second AI model. It may be understood that the first value range may alternatively be less than T1. In this case, if the time interval between the channel obtaining time corresponding to the first channel information and the channel obtaining time corresponding to the second channel information is greater than or equal to T1, the communication apparatus determines the second AI model.

T1 is a maximum value of the time interval that is between channel obtaining time and that corresponds to the first capability requirement of the first AI model.

In an example, T1 represents a maximum time interval between channel obtaining time corresponding to any two pieces of channel information. In this example, the first channel information and the second channel information may be any two of the at least two pieces of channel information.

In another example, T1 represents a maximum time interval between channel obtaining time corresponding to earliest channel information and channel obtaining time corresponding to latest channel information. In this example, the first channel information may be earliest obtained channel information in the at least two pieces of channel information, and the second channel information may be latest obtained channel information in the at least two pieces of channel information.

In another example, T1 represents a maximum time interval between channel obtaining time corresponding to two pieces of channel information separated by k pieces of channel information, where k is an integer greater than or equal to 1. It is assumed that the at least two pieces of channel information are sequentially arranged based on obtaining time. In this example, the first channel information and the second channel information are separated by k pieces of channel information. For example, the input of the first AI model is n pieces of channel information, denoted as {*Hₜ₋ₙ*, *H*_{*t*-*n*+1},..., *H*_{*t*-1}}. In this case, for example, the first channel information is *H*_{*t*-1}, and the second channel information is *H*_{*t-k*-1}; or the first channel information is *Hₜ₋ₘ*, and the second channel information is *Hₜ₋ₖ₋ₘ*.

Optionally, T1 is related to at least one of the following: a model structure, training data, a training method, and a model function. For example, in a model verification phase, a model may be tested by using channel data at different time intervals, to determine a value of T1. In this way, after model training is completed, T1 corresponding to the model may be determined, so that when the communication apparatus deploys the model, the value of T1 may be obtained.

In another possible implementation, the first value range is a range related to a plurality of values. For example, the first value range is less than or equal to T11 and greater than or equal to T12 (T11>T12). Based on this, if the time interval between the channel obtaining time corresponding to the first channel information and the channel obtaining time corresponding to the second channel information is greater than T11 or less than T12, the communication apparatus determines the second AI model. It may be understood that the first value range may alternatively be less than T11 and greater than T12. In this case, if the time interval between the channel obtaining time corresponding to the first channel information and the channel obtaining time corresponding to the second channel information is greater than or equal to T11 or less than or equal to T12, the communication apparatus determines the second AI model.

Based on the rule #1, further optionally, when determining that the time interval between the channel obtaining time corresponding to the first channel information and the channel obtaining time corresponding to the second channel information meets the first capability requirement of the first AI model, the communication apparatus does not switch the AI model, that is, determines to process a part of or all the at least two pieces of channel information by using the first AI model. Specifically, the input of the first AI model includes the part of or all the at least two pieces of channel information. Specific input of the first AI model may be determined, for example, based on another rule. This is not limited.

Rule #2: The communication apparatus determines the second AI model when determining that the time interval between the channel obtaining time corresponding to the first channel information and the channel obtaining time corresponding to the second channel information does not meet the first capability requirement of the first AI model, where the input of the second AI model includes the second channel information, and state information of the second AI model is a default value.

Based on the rule, if the time interval between the channel obtaining time corresponding to the first channel information and the channel obtaining time corresponding to the second channel information does not meet the first capability requirement of the first AI model, the first AI model may be deactivated, and the second AI model may be determined. In this way, when it is determined that the first AI model is inappropriate, the second AI model may be used to perform a related operation, thereby avoiding a performance loss caused by processing the channel information by using the inappropriate AI model.

For a manner of determining the second AI model, refer to the descriptions in the rule #1. Details are not described herein again.

In this embodiment of this application, state information of an AI model is a piece of input of the AI model. For example, input of the AI model includes channel information and the state information of the AI model, and output of the AI model is feedback information of the channel information and updated state information of the AI model, which is used as next input of the AI model. Alternatively, the input of the AI model includes feedback information of channel information and the state information of the AI model, and the output of the AI model is restored channel information and updated state information of the AI model, which is used as next input of the AI model. For example, in FIG. 2, eₜ₋₁ input into the encoder may be understood as state information of the AI model deployed in the encoder. eₜ₋₁ is previous output of the AI model, and therefore is related to channel information previously input into the AI model. Therefore, eₜ₋₁ is information related to historical channel information. When the AI model is run for the first time after being enabled, the state information of the AI model may be the default value.

The default value may be, for example, 0 or another value. This is not limited. The default value is not further described below.

Based on the rule #2, further optionally, when determining that the time interval between the channel obtaining time corresponding to the first channel information and the channel obtaining time corresponding to the second channel information meets the first capability requirement of the first AI model, the communication apparatus determines that the input of the first AI model includes the second channel information and state information of the first AI model, and the state information of the first AI model is determined based on previous output of the first AI model.

Rule #3: When determining that the time interval between the channel obtaining time corresponding to the first channel information and the channel obtaining time corresponding to the second channel information does not meet a second capability requirement of the first AI model, the communication apparatus determines that the input of the first AI model includes M of the at least two pieces of channel information and X default values, where the M pieces of channel information do not include the first channel information.

Based on the rule, if the time interval between the channel obtaining time corresponding to the first channel information and the channel obtaining time corresponding to the second channel information does not meet the second capability requirement of the first AI model, the first AI model may continue to be used to process channel information, but the channel information to be processed does not include at least the first channel information, that is, the input of the first AI model does not include at least the first channel information. In this way, inappropriate channel information can be removed, and a performance loss caused by using the inappropriate channel information as input of the first AI model is avoided.

M is an integer greater than or equal to 1, and X is an integer greater than or equal to 0.

Case #1: X=0. In this case, based on the rule #3, when the time interval between the channel obtaining time corresponding to the first channel information and the channel obtaining time corresponding to the second channel information does not meet the second capability requirement of the first AI model, the input of the first AI model includes M pieces of channel information. For example, it is assumed that the at least two pieces of channel information are n pieces of channel information, denoted as {*H*_{*t*-}*ₙ, H*_{*t-*n+1},..., *H*_{*t*-1}}, the first channel information is *Hₜ₋ₖ,* and the second channel information is *H*_{*t*-1}. If a time interval between channel obtaining time corresponding to *Hₜ₋ₖ* and channel obtaining time corresponding to *H*_{*t*-1} does not meet the second capability requirement of the first AI model, the input of the first AI model does not include *Hₜ₋ₖ,* that is, the input of the first AI model is {*Hₜ₋ₙ*,..., *H*_{*t*-*k*-1}, *H*_{*t*-*k*+1},..., *H*_{*t*-1}}. It may be understood that determining may be performed on channel information before *Hₜ₋ₖ* and the second channel information. If it is determined that a time interval between the channel information before *Hₜ₋ₖ* and the second channel information does not meet the second capability requirement of the first AI model, the input of the first AI model does not include the channel information before *Hₜ₋ₖ,* either.

Case #2: X>0. In this case, based on the rule #3, when the time interval between the channel obtaining time corresponding to the first channel information and the channel obtaining time corresponding to the second channel information does not meet the second capability requirement of the first AI model, the input of the first AI model includes M pieces of channel information and at least one default value. A quantity of default values is not limited. The following describes two possible implementations.

In a first possible implementation, the quantity of default values depends on a quantity of pieces of channel information whose time interval between channel obtaining time does not meet the second capability requirement of the first AI model. For example, it is assumed that at least two pieces of channel information are n pieces of channel information, denoted as {*Hₜ₋ₙ*, *H*_{*t-n*+1},*...*, *H*_{*t*-1}}*,* the first channel information is *Hₜ₋ₙ*, the second channel information is *H*_{*t*-1}, and third channel information is *H*_{*t*-*n*+1}*.* If a time interval between channel obtaining time corresponding to *Hₜ₋ₙ* and channel obtaining time corresponding to *H*_{*t*-1} does not meet the second capability requirement of the first AI model, and a time interval between channel obtaining time corresponding to *H*_{*t-n*+1} and the channel obtaining time corresponding to *H*_{*t*-1} does not meet the second capability requirement of the first AI model, the input of the first AI model includes two default values (for differentiation, the two default values are denoted as *H̅ₜ₋ₙ* and *H̅*_{*t*-*n*+1}), and does not include *Hₜ₋ₙ* or *H*_{*t*-*n*+1}*,* that is, the input of the first AI model is {*H̅ₜ₋ₙ*, *H̅*_{*t*-*n+*1}, *H*_{*t*-*n*+2}*,..., H*_{*t*-1}}.

In a second possible implementation, the quantity of default values is constantly 1. For example, it is assumed that the at least two pieces of channel information are n pieces of channel information, denoted as {*Hₜ₋ₙ*, *H*_{*t-n*+1},..., *H*_{*t*-1}}*,* the first channel information is *Hₜ₋ₙ*, and the second channel information is *H*_{*t*-1}. If a time interval between channel obtaining time corresponding to *H*_{*t*-*n*} and channel obtaining time corresponding to *H*_{*t*-1} does not meet the second capability requirement of the first AI model, the input of the first AI model includes one default value (for differentiation, the default value is denoted as *H̅*), and does not include *H*_{*t*-*n*}, that is, the input of the first AI model is {*H̅, H*_{*t*-*n*+1},..., *H*_{*t*-1}}. For another example, it is assumed that the first channel information is *Hₜ₋ₙ*, the second channel information is *H*_{*t*-1}*,* and third channel information is *H*_{*t*-*n*+1}*.* If a time interval between channel obtaining time corresponding to *H*_{*t*-*n*} and channel obtaining time corresponding to *H*_{*t*-1} does not meet the second capability requirement of the first AI model, and a time interval between channel obtaining time corresponding to *H*_{*t-n*+1} and the channel obtaining time corresponding to *H*_{*t*-1} does not meet the second capability requirement of the first AI model, the input of the first AI model includes one default value *H̅,* and does not include *Hₜ₋ₙ* or *H*_{*t-n*+1}*,* that is, the input of the first AI model is {*H̅*, *H*_{*t*-*n*+2},...,*H*_{*t*-1}}.

In this embodiment of this application, a second capability requirement of an AI model may be used to determine input of the AI model. For example, if a time interval between channel obtaining time corresponding to two pieces of channel information meets the second capability requirement of the AI model, the input of the AI model includes the two pieces of channel information. If the time interval between the channel obtaining time corresponding to the two pieces of channel information does not meet the second capability requirement of the AI model, the input of the AI model does not include earlier obtained channel information in the two pieces of channel information.

Optionally, the second capability requirement of the first AI model is that a time interval between channel obtaining time is within a second value range. The time interval between the channel obtaining time may be a time interval between channel obtaining time corresponding to any two pieces of channel information. The second value range may be a range related to one or more values. This is not limited.

In a possible implementation, the second value range is a range related to one value. For example, the second value range is less than or equal to T2. Based on this, if the time interval between the channel obtaining time corresponding to the first channel information and the channel obtaining time corresponding to the second channel information is greater than T2, the communication apparatus determines that the input of the first AI model includes M of the at least two pieces of channel information and X default values. It may be understood that the second value range may alternatively be less than T2. In this case, if the time interval between the channel obtaining time corresponding to the first channel information and the channel obtaining time corresponding to the second channel information is greater than or equal to T2, the communication apparatus determines that the input of the first AI model includes M of the at least two pieces of channel information and X default values.

T2 is a maximum value of the time interval that is between channel obtaining time and that corresponds to the second capability requirement of the first AI model. For T2, refer to related descriptions of T1. Details are not described herein again.

In another possible implementation, the second value range is a range related to a plurality of values. For example, the second value range is less than or equal to T21 and greater than or equal to T22 (T21>T22). Based on this, if the time interval between the channel obtaining time corresponding to the first channel information and the channel obtaining time corresponding to the second channel information is greater than T21 or less than T22, the communication apparatus determines that the input of the first AI model includes M of the at least two pieces of channel information and X default values. It may be understood that the second value range may alternatively be less than T21 and greater than T22. In this case, if the time interval between the channel obtaining time corresponding to the first channel information and the channel obtaining time corresponding to the second channel information is greater than or equal to T21 or less than or equal to T22, the communication apparatus determines that the input of the first AI model includes M of the at least two pieces of channel information and X default values.

Further, optionally, the M pieces of channel information further do not include channel information obtained before the first channel information. Considering that the time interval between the channel obtaining time corresponding to the first channel information and the channel obtaining time corresponding to the second channel information does not meet the second capability requirement of the first AI model, for example, the time interval between the channel obtaining time corresponding to the first channel information and the channel obtaining time corresponding to the second channel information is greater than T2, a time interval between the channel information (denoted as channel information #1 for differentiation) obtained before the first channel information and the channel obtaining time corresponding to the second channel information is also greater than T2. In this way, it can be directly determined that the time interval between the channel information #1 and the channel obtaining time corresponding to the second channel information is not within the second value range, either, and overheads caused by determining whether the time interval between the channel information #1 and the channel obtaining time corresponding to the second channel information is greater than T2 can be reduced.

For example, it is assumed that the at least two pieces of channel information are n pieces of channel information, denoted as {*H*_{*t*-*n*}, *H*_{*t*-*n*+1},*..., H*_{*t*-1}}, the first channel information is *H*_{*t*-1}*₋ₖ,* and the second channel information is *H*_{*t*-1}. If a time interval between channel obtaining time corresponding to *H*_{*t*-1-*k*} and channel obtaining time corresponding to *H*_{*t*-1} is greater than T2, a time interval between channel obtaining time corresponding to channel information ({*H*_{*t*-}*ₙ, H*_{*t-n*+1},..*., H*_{*t*-*k*-2}}) before *H*_{*t*-1-*k*} and the channel obtaining time corresponding to *H*_{*t*-1} is also greater than T2. Therefore, the input of the first AI model does not include {*Hₜ₋ₙ*, *H*_{*t*-*n*+1},..., *H*_{*t*-*k*-2}, *H*_{*t*-1-*k*}}. For example, in the foregoing case #1, the input of the first AI model is {*H*_{*t*-*k*}, *H*_{*t*-*k*+1},..., *H*_{*t*-1}}; or in the first possible implementation in the foregoing case #2, the input of the first AI model is {*H̅*_{*t*-*n*}, *H̅*_{*t*-*n*+1},..., *H̅*_{*t*-1-*k*}, *H*_{*t*-*k*}, *H*_{*t*-*n*+1},..., *H*_{*t*-1}}; or in the second possible implementation in the foregoing case #2, the input of the first AI model is {*H̅*, *H*_{*t*-*k*}, *H*_{*t*-*k*+1},..., *H*_{*t*-1}}.

Further, optionally, the M pieces of channel information further do not include channel information obtained before the second channel information. In this way, considering that the time interval between the channel obtaining time corresponding to the first channel information and the channel obtaining time corresponding to the second channel information does not meet the second capability requirement of the first AI model, for example, the time interval between the channel obtaining time corresponding to the first channel information and the channel obtaining time corresponding to the second channel information is greater than T2, it may be determined that the input of the first AI model does not include the channel information obtained before the second channel information. In this manner, for the second channel information, if there is channel information whose time interval between channel obtaining time corresponding to the channel information and the channel obtaining time corresponding to the second channel information does not meet the second capability requirement of the first AI model, it may be considered that the channel information before the second channel information may not be used, or it is difficult to achieve a performance gain by mining channel time-domain correlation between the second channel information and the channel information before the second channel information. Therefore, the input of the first AI model may not include the channel information obtained before the second channel information.

Based on the rule #3, further optionally, when determining that the time interval between the channel obtaining time corresponding to the first channel information and the channel obtaining time corresponding to the second channel information meets the second capability requirement of the first AI model, the communication apparatus determines that the input of the first AI model includes the at least two pieces of channel information.

Rule #4: When determining that the time interval between the channel obtaining time corresponding to the first channel information and the channel obtaining time corresponding to the second channel information does not meet the second capability requirement of the first AI model, the communication apparatus determines that the input of the first AI model includes the second channel information, and state information of the first AI model is the default value.

Based on the rule, if the time interval between the channel obtaining time corresponding to the first channel information and the channel obtaining time corresponding to the second channel information does not meet the second capability requirement of the first AI model, the first AI model may continue to be used to process the second channel information, and the state information of the first AI model is the default value rather than determined based on previous output of the first AI model. In this way, the state information of the first AI model is not related to historical channel information, and impact caused by state information related to inappropriate channel information can be avoided, thereby improving output performance of the first AI model.

Based on the rule #4, further optionally, when determining that the time interval between the channel obtaining time corresponding to the first channel information and the channel obtaining time corresponding to the second channel information meets the second capability requirement of the first AI model, the communication apparatus determines that the input of the first AI model includes the second channel information and state information of the first AI model, and the state information of the first AI model is determined based on previous output of the first AI model.

The foregoing rule #1 to rule #4 are examples for description, and any variant rules of the rules are also applicable to embodiments of this application.

The foregoing rule #1 to rule #4 may be used separately, or may be used in combination. This is not limited. For example, the rule #1 and the rule #3 are used in combination. If the time interval between the channel obtaining time corresponding to the first channel information and the channel obtaining time corresponding to the second channel information neither meets the first capability requirement of the first AI model nor meets the second capability requirement of the first AI model, in a possible implementation, a rule with a high priority may be used based on priorities, or all rules are used at the same time, or a rule is randomly selected for use. For example, assuming that a priority of the rule #1 is higher than a priority of the rule #2, if the time interval between the channel obtaining time neither meets the first capability requirement of the first AI model nor meets the second capability requirement of the first AI model, processing is performed in the manner of the rule #1, that is, the second AI model is determined, and the input of the second AI model includes the at least two pieces of channel information.

In addition, optionally, different rules may be used for AI models with different functions or structures. In other words, different rules may be obtained through division based on functions or structures of AI models. For example, there are two types of rules. For differentiation, the two types of rules are denoted as a first-type rule and a second-type rule. The first-type rule is related to state information of an AI model, and the second-type rule is related to input of an AI model. In a possible implementation, an AI model used for channel feedback corresponds to the first-type rule, and an AI model used for channel prediction corresponds to the second-type rule. For example, in the foregoing rule #1 to rule #4, the rule #2 and the rule #4 belong to the first-type rule, and the rule #1 and the rule #3 belong to the second-type rule.

Case 2: The communication apparatus is a network device.

In this case, optionally, step 302 includes any one of the following solutions.

Rule #5: The communication apparatus determines the second AI model when determining that the time interval between the channel obtaining time corresponding to the first channel information and the channel obtaining time corresponding to the second channel information does not meet a first capability requirement of the first AI model, where input of the second AI model includes feedback information of the at least two pieces of channel information.

In this embodiment of this application, feedback information of channel information may be feedback information output by an encoder on a terminal device side, or may be obtained by processing output of the encoder, for example, a coarse-precision channel information restored by using a decoder.

For the rule #5, refer to the foregoing rule #1. Details are not described herein again.

Rule #6: The communication apparatus determines the second AI model when determining that the time interval between the channel obtaining time corresponding to the first channel information and the channel obtaining time corresponding to the second channel information does not meet the first capability requirement of the first AI model, where the input of the second AI model includes feedback information of the second channel information, and state information of the second AI model is a default value.

For the rule #6, refer to the foregoing rule #2. Details are not described herein again.

Rule #7: When determining that the time interval between the channel obtaining time corresponding to the first channel information and the channel obtaining time corresponding to the second channel information does not meet a second capability requirement of the first AI model, the communication apparatus determines that the input of the first AI model includes feedback information of M of the at least two pieces of channel information and X default values, where the M pieces of channel information do not include the first channel information, M is an integer greater than or equal to 1, and X is an integer greater than or equal to 0.

For the rule #7, refer to the foregoing rule #3. Details are not described herein again.

Rule #8: When determining that the time interval between the channel obtaining time corresponding to the first channel information and the channel obtaining time corresponding to the second channel information does not meet the second capability requirement of the first AI model, the communication apparatus determines that the input of the first AI model includes the feedback information of the second channel information, and state information of the first AI model is the default value.

For the rule #8, refer to the foregoing rule #4. Details are not described herein again.

The foregoing describes the solution of step 302 with reference to the case in which the communication apparatus is a terminal device and the case in which the communication apparatus is a network device. It may be understood that the foregoing descriptions are example descriptions, and any variant rules of the foregoing rules are also applicable to embodiments of this application. For example, the communication apparatus is a terminal device. When determining that the time interval between the channel obtaining time corresponding to the first channel information and the channel obtaining time corresponding to the second channel information does not meet the first capability requirement of the first AI model, the communication apparatus determines the second AI model, where the input of the second AI model includes M of the at least two pieces of channel information and X default values, the M pieces of channel information do not include the first channel information, M is an integer greater than or equal to 1, and X is an integer greater than or equal to 0. It is similar thereto when the communication apparatus is a network device, and details are not described herein again.

The following describes manners of obtaining a rule.

In a possible implementation, the rule is predefined in a protocol, prestored, or preconfigured.

Based on this implementation, the communication apparatus may directly perform determining by using a predefined rule. For example, it is assumed that the usage rule #1 is predefined for determining. In this case, the communication apparatus may directly determine the second AI model or the input of the first AI model based on the time interval between the channel obtaining time corresponding to the first channel information and the channel obtaining time corresponding to the second channel information and the predefined first capability requirement of the first AI model.

In another possible implementation, the communication apparatus receives indication information (denoted as indication information #1 for differentiation), and the indication information #1 indicates a usage rule of the first AI model.

For example, the communication apparatus is a terminal device. In this case, that the communication apparatus receives the indication information #1 may include: The terminal device receives indication information #1 from a network device, or the terminal device receives indication information #1 from another device (for example, an AI node or another terminal device). For another example, the communication apparatus is a network device. In this case, that the communication apparatus receives the indication information #1 may include: The network device receives indication information #1 from a terminal device, or the network device receives indication information #1 from another device (for example, an AI node or another network device).

In an example, the indication information #1 directly indicates the usage rule of the first AI model. For example, the indication information #1 is the usage rule of the first AI model. For another example, the indication information #1 is an identifier or a number of the usage rule of the first AI model.

In another example, the indication information #1 indirectly indicates the usage rule of the first AI model. For example, the indication information #1 is other information (referred to as information #A for differentiation), and the information #A has an association relationship with the rule. In this way, the usage rule of the first AI model may be determined based on the information #A indicated by the indication information #1 and the association relationship between the information #A and the rule. The association relationship between the information #A and the rule may be predefined in a protocol, prestored, preconfigured, or indicated by another communication apparatus.

In a possible implementation, the information #A is a value of a parameter in the rule.

For example, it is assumed that the first capability requirement of the first AI model is that a time interval between channel obtaining time corresponding to any two pieces of channel information is less than or equal to T1, and a value of T1 has an association relationship with the rule. For example, the value of T1 may be T11 and T12. If the information #A indicated by the indication information #1 is T11, it indicates that the usage rule of the first AI model is the rule #1. If the information #A indicated by the indication information #1 is T12, it indicates that the usage rule of the first AI model is the rule #2.

In another possible implementation, the information #A is a function of the AI model.

For example, it is assumed that channel prediction corresponds to the rule #1, and channel feedback corresponds to the rule #2. For example, if the information #A indicates that the function of the AI model is channel feedback, the usage rule of the AI model is the rule #2. If the information #A indicates that the function of the AI model is channel prediction, the usage rule of the AI model is the rule #1.

For another example, it is assumed that channel feedback corresponds to the first-type rule (for example, the first-type rule includes the rule #2 and the rule #4), and channel prediction corresponds to the second-type rule (for example, the second-type rule includes the rule #1 and the rule #3). For example, if the information #A indicates that the function of the AI model is channel feedback, the usage rule of the AI model is the first-type rule. If the information #A indicates that the function of the AI model is channel prediction, the usage rule of the AI model is the second-type rule. The usage rule of the AI model may be one or more rules in the first-type rule or the second-type rule. The following lists two examples.

In one example, the usage rule of the AI model may be one rule in the first-type rule or the second-type rule. In a possible implementation, a specific usage rule of the AI model may be indicated by using information #A'. For example, the information #A indicates that the function of the AI model is channel feedback, and the information #A' indicates that the usage rule of the AI model is the rule #2 or the rule #4. In this way, it may be determined, based on the information #A and the information #A', that the usage rule of the AI model is the rule #2 or the rule #4 in the first-type rule. Alternatively, the information #A indicates that the function of the AI model is channel prediction, and the information #A' indicates that the usage rule of the AI model is the rule #1 or the rule #3. In this way, it may be determined, based on the information #A and the information #A', that the usage rule of the AI model is the rule #1 or the rule #3 in the second-type rule. In another possible implementation, a rule with a specific number may be defaulted or predefined. For example, if the information #A indicates that the function of the AI model is channel feedback, the usage rule of the AI model is a rule with a specific number (for example, a rule with a smallest number or a rule with a largest number) in the first-type rule. If the information #A indicates that the function of the AI model is channel prediction, the usage rule of the AI model is a rule with a specific number (for example, a rule with a smallest number or a rule with a largest number) in the second-type rule.

In the other example, the usage rule of the AI model may be a plurality of rules (for example, all rules) in the first-type rule or the second-type rule. In this example, when determining is performed based on a plurality of rules, if a plurality of rules are met at the same time (for example, the rule #2 and the rule #4 in the first-type rule are met at the same time), any rule may be selected, or a rule with a high priority may be selected based on priorities. For details, refer to the foregoing descriptions. Details are not described herein again.

It may be understood that the function of the AI model may be replaced with a structure of the AI model.

It may be understood that the foregoing descriptions are example descriptions, and constitute no limitation. For example, the indication information #1 is implemented by using at least one bit, and the usage rule of the first AI model is determined by using a value of the indication information #1. For example, it is assumed that there are two rules, for example, the foregoing rule #1 and rule #3, and the usage rule of the first AI model is indicated by using 1 bit. If the bit is set to "0", it indicates that the usage rule of the first AI model is the rule #1. If the bit is set to "1", it indicates that the usage rule of the first AI model is the rule #3. It should be understood that the foregoing descriptions are merely example descriptions, and constitute no limitation.

Optionally, a parameter in the rule, for example, a capability requirement of an AI model or a value range corresponding to the capability requirement of the AI model, may be obtained in any one of the following manners.

In a possible implementation, the parameter in the rule is predefined in a protocol, prestored, or preconfigured.

Based on this implementation, after the rule is obtained, the parameter in the rule may be determined. For a manner of obtaining the rule by the communication apparatus, refer to the foregoing related descriptions. Details are not described herein again.

In another possible implementation, indication information (denoted as indication information #2 for differentiation) is received, and the indication information #2 indicates the parameter in the rule.

For example, the communication apparatus is a terminal device. In this case, that the communication apparatus receives the indication information #2 may include: The terminal device receives indication information #2 from a network device, or the terminal device receives indication information #2 from another device (for example, an AI node or another terminal device). For another example, the communication apparatus is a network device. In this case, that the communication apparatus receives the indication information #2 may include: The network device receives indication information #2 from a terminal device, or the network device receives indication information #2 from another device (for example, an AI node or another network device).

In an example, the indication information #2 directly indicates the parameter in the rule. For example, the indication information #2 is the parameter in the rule.

In another example, the indication information #2 indirectly indicates the parameter in the rule. For example, the indication information #2 is other information (referred to as information #B for differentiation), and the information #B has an association relationship with the parameter in the rule. In this way, the parameter in the rule may be determined based on the information #B indicated by the indication information #2 and the association relationship between the information #B and the parameter in the rule. The association relationship between the information #B and the parameter in the rule may be predefined in a protocol, prestored, preconfigured, or indicated by another communication apparatus.

When the foregoing rule is used for determining, used channel information may be latest channel information and any piece of historical channel information, or the latest channel information and channel information that is separated therefrom by k pieces of channel information, or may be any two pieces of channel information, or may be any two pieces of channel information that are separated by k pieces of channel information. k is an integer greater than or equal to 1.

In a first possible implementation, the first channel information is any one of the at least two pieces of channel information other than the second channel information.

For example, the second channel information is latest obtained channel information in the at least two pieces of channel information. In this case, channel obtaining time corresponding to the latest channel information may be compared with channel obtaining time corresponding to each piece of historical channel information.

For example, if the at least two pieces of channel information are {*H*_{*t*-*n*}, *H*_{*t*-*n*+1},..., *Hₜ*}*,* and the second channel information is latest channel information Hₜ, a time interval between Hₜ and each piece of channel information in {*H*_{*t*-*n*}, *H*_{*t-n*+1},..., *H*_{*t*-1}} may be determined based on the foregoing rule.

For another example, assuming that original input of the first AI model is Hₜ and *e*_{*t*-1}*,* where *e*_{*t*-1} is related to at least one piece of channel information in {*H*_{*t*-1}, *H*_{*t*-2}, *H*_{*t*-3},...}, and the second channel information is latest channel information Hₜ, a time interval between channel obtaining time corresponding to Hₜ and channel obtaining time corresponding to each piece of channel information in {*H*_{*t*-*n*}, *H*_{*t*-*n*+1},..., *H*_{*t*-1}} may be determined based on the foregoing rule.

In a second possible implementation, the first channel information and the second channel information are separated by k pieces of channel information.

For example, the at least two pieces of channel information are {*Hₜ₋ₙ*, *H*_{*t*-*n*+1},..., *Hₜ*}, and the second channel information is latest channel information Hₜ. In this case, a time interval between channel obtaining time corresponding to Hₜ and channel obtaining time corresponding to Hₜ₋ₖ may be determined based on the foregoing rule.

A manner of obtaining k is not limited. For example, k is predefined in a protocol, prestored, or preconfigured. For another example, the communication apparatus receives indication information (denoted as indication information #3 for differentiation), and the indication information #3 indicates k. For example, the communication apparatus is a terminal device. In this case, that the communication apparatus receives the indication information #3 may include: The terminal device receives indication information #3 from a network device, or the terminal device receives indication information #3 from another device (for example, an AI node or another terminal device). For another example, the communication apparatus is a network device. In this case, that the communication apparatus receives the indication information #3 may include: The network device receives indication information #3 from a terminal device, or the network device receives indication information #3 from another device (for example, an AI node or another network device).

The foregoing two implementations are examples for description, and variants of the implementations are also applicable to embodiments of this application. For example, a time interval between channel obtaining time corresponding to a piece of channel information and channel obtaining time corresponding to any other piece of channel information may be determined based on the foregoing rule. For another example, a time interval between channel obtaining time corresponding to two specific pieces of channel information (for example, earliest obtained channel information and latest obtained channel information) in the at least two pieces of channel information may be determined based on the foregoing rule.

Generally, time domain behavior of the reference signal may be periodic, semi-persistent, or aperiodic. That the time domain behavior of the reference signal is periodic indicates that a network device periodically sends the reference signal to a terminal device. That the time domain behavior of the reference signal is aperiodic indicates that a network device aperiodically sends the reference signal to a terminal device. That the time domain behavior of the reference signal is semi-persistent indicates that a network device semi-persistently sends the reference signal to a terminal device. Specifically, after configuring information about the semi-persistent reference signal, the network device does not immediately send the reference signal, but instead, the network device first sends activation signaling to notify the terminal device. After the activation signaling takes effect, the network device periodically sends the reference signal, until the network device delivers deactivation signaling and stops sending the reference signal. The following mainly provides example descriptions with reference to periodic or semi-persistent time domain behavior of the reference signal and different functions of the AI model by using an example in which the communication apparatus is a terminal device.

Scenario 1: The AI model is used for channel prediction.

In this scenario, input of the AI model is channel information obtained through channel detection based on the reference signal. As described above, in this scenario, channel obtaining time corresponding to the channel information is equal to delivery time of the reference signal corresponding to the channel information, or the channel obtaining time corresponding to the channel information is equal to a sum of the delivery time of the reference signal corresponding to the channel information and the first offset.
1. The time domain behavior of the reference signal is periodic.

It is assumed that a periodicity of the reference signal is Y, and the first channel information and the second channel information are separated by k pieces of channel information.

For example, the rule #1 may be replaced as follows: When determining that k*Y does not meet the first capability requirement of the first AI model, for example, k*Y is greater than T1, the communication apparatus determines the second AI model, and the input of the second AI model includes the at least two pieces of channel information.

For example, the rule #3 may be replaced as follows: When determining that k*Y does not meet the second capability requirement of the first AI model, for example, k*Y is greater than T2, the communication apparatus determines that the input of the first AI model includes M of the at least two pieces of channel information and X default values, where the M pieces of channel information do not include the first channel information.

For example, the rule #5 may be replaced as follows: When determining that k*Y does not meet the first capability requirement of the first AI model, for example, k*Y is greater than T1, the communication apparatus determines the second AI model, where the input of the second AI model includes the feedback information of the at least two pieces of channel information.

For example, the rule #7 may be replaced as follows: When determining that k*Y does not meet the second capability requirement of the first AI model, for example, k*Y is greater than T2, the communication apparatus determines that the input of the first AI model includes feedback information of M of the at least two pieces of channel information and X default values, where the M pieces of channel information do not include the first channel information.

2. The time domain behavior of the reference signal is semi-persistent.

For example, the rule #1 may be replaced as follows: When determining that a time interval between last deactivation and current activation does not meet the first capability requirement of the first AI model, for example, the time interval between the last deactivation and the current activation is greater than T1, the communication apparatus determines the second AI model, where the input of the second AI model includes the at least two pieces of channel information.

For example, the rule #3 may be replaced as follows: When determining that the time interval between the last deactivation and the current activation does not meet the second capability requirement of the first AI model, for example, the time interval between the last deactivation and the current activation is greater than T2, the communication apparatus determines that the input of the first AI model includes M of the at least two pieces of channel information and X default values, where the M pieces of channel information do not include the first channel information.

For example, the rule #5 may be replaced as follows: When determining that the time interval between the last deactivation and the current activation does not meet the first capability requirement of the first AI model, for example, the time interval between the last deactivation and the current activation is greater than T1, the communication apparatus determines the second AI model, where the input of the second AI model includes the feedback information of the at least two pieces of channel information.

For example, the rule #7 may be replaced as follows: When determining that the time interval between the last deactivation and the current activation does not meet the second capability requirement of the first AI model, for example, the time interval between the last deactivation and the current activation is greater than T2, the communication apparatus determines that the input of the first AI model includes feedback information of M of the at least two pieces of channel information and X default values, where the M pieces of channel information do not include the first channel information.

Scenario 2: The AI model is used for channel feedback.

In this scenario, input of the AI model includes channel information obtained through channel detection based on the reference signal and state information of the AI model. Specifically, the at least two pieces of channel information are obtained through at least two times of reference signal measurement, and each piece of channel information corresponds to one time of reference signal measurement. As described above, in this scenario, channel obtaining time corresponding to the channel information is equal to corresponding channel reporting time, or the channel obtaining time corresponding to the channel information is equal to a sum of the corresponding channel reporting time and the third offset, or the channel obtaining time corresponding to the channel information is equal to delivery time of the reference signal corresponding to the channel information, or the channel obtaining time corresponding to the channel information is equal to a sum of the delivery time of the reference signal corresponding to the channel information and the first offset.
1. The time domain behavior of the reference signal is periodic.

It is assumed that a periodicity of the reference signal is Y, and the first channel information and the second channel information are separated by k pieces of channel information.

For example, the rule #2 may be replaced as follows: When determining that k*Y does not meet the first capability requirement of the first AI model, for example, k*Y is greater than T1, the communication apparatus determines the second AI model, where the input of the second AI model includes the second channel information, and the state information of the second AI model is the default value.

For example, the rule #4 may be replaced as follows: When determining that k*Y does not meet the second capability requirement of the first AI model, for example, k*Y is greater than T2, the communication apparatus determines that the input of the first AI model includes the second channel information, and the state information of the first AI model is the default value.

For example, the rule #6 may be replaced as follows: When determining that k*Y does not meet the first capability requirement of the first AI model, for example, k*Y is greater than T1, the communication apparatus determines the second AI model, where the input of the second AI model includes the feedback information of the second channel information, and the state information of the second AI model is the default value.

For example, the rule #8 may be replaced as follows: When determining that k*Y does not meet the second capability requirement of the first AI model, for example, k*Y is greater than T2, the communication apparatus determines that the input of the first AI model includes the feedback information of the second channel information, and the state information of the first AI model is the default value.

2. The time domain behavior of the reference signal is semi-persistent.

For example, the rule #2 may be replaced as follows: When determining that a time interval between last deactivation and current activation does not meet the first capability requirement of the first AI model, for example, the time interval between the last deactivation and the current activation is greater than T1, the communication apparatus determines the second AI model, where the input of the second AI model includes the second channel information, and the state information of the second AI model is the default value.

For example, the rule #4 may be replaced as follows: When determining that the time interval between the last deactivation and the current activation does not meet the second capability requirement of the first AI model, for example, the time interval between the last deactivation and the current activation is greater than T2, the communication apparatus determines that the input of the first AI model includes the second channel information, and the state information of the first AI model is the default value.

For example, the rule #6 may be replaced as follows: When determining that the time interval between the last deactivation and the current activation does not meet the first capability requirement of the first AI model, for example, the time interval between the last deactivation and the current activation is greater than T1, the communication apparatus determines the second AI model, where the input of the second AI model includes the feedback information of the second channel information, and the state information of the second AI model is the default value.

For example, the rule #8 may be replaced as follows: When determining that the time interval between the last deactivation and the current activation does not meet the second capability requirement of the first AI model, for example, the time interval between the last deactivation and the current activation is greater than T2, the communication apparatus determines that the input of the first AI model includes the feedback information of the second channel information, and the state information of the first AI model is the default value.

The foregoing descriptions are example descriptions, and constitute no limitation.

In addition, embodiments of this application further propose that for a semi-persistent reference signal, the state information of the first AI model is reset to the default value in response to activation by default, or another AI model (for example, the second AI model) different from the first AI model may be used by default to perform a related operation. For example, for the semi-persistent reference signal, each time semi-persistent reporting is triggered, the network device may indicate the terminal device to set the state information e₍ₜ₋₁₎ of the first AI model to the default value before the first reporting in a current time period, or the network device indicates the terminal device to select another AI model different from the first AI model in the current time period, or the terminal device sets, by default, the state information e₍ₜ₋₁₎ of the first AI model to the default value before the first reporting in the current time period, or the terminal device selects, by default, another AI model different from the first AI model in the current time period. In this case, for example, the time interval between the channel obtaining time corresponding to the channel information may not need to be determined.

For ease of understanding, the following provides example descriptions with reference to different scenarios by using interaction between a terminal device and a network device as an example and assuming that an encoder is deployed on a terminal device side and a decoder is deployed on a network device side. For content that is not described in detail below, refer to the descriptions in the method 300. Details are not described below again.

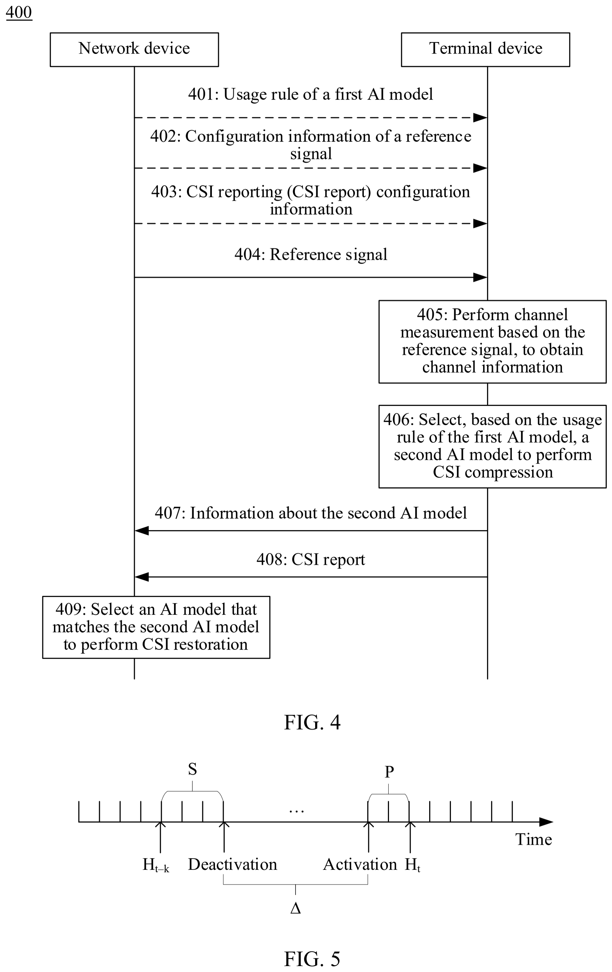

FIG. 4 is a schematic flowchart of a communication method 400 according to an embodiment of this application. An AI model in the method 400 may be used for channel feedback. The method 400 shown in FIG. 4 may include the following steps.

Optionally, the method 400 includes step 401: A network device sends a usage rule of a first AI model to a terminal device.

In a possible implementation, the network device sends indication information #1 to the terminal device, and the indication information #1 indicates the usage rule of the first AI model. For an implementation of the indication information #1, refer to related descriptions in the method 300. Details are not described herein again.

It may be understood that, herein, that the network device sends the usage rule of the first AI model to the terminal device is an example for description. As described in the embodiment of FIG. 3, the usage rule of the first AI model may alternatively be predefined in a protocol, prestored, or preconfigured. In this way, the terminal device may determine the usage rule of the first AI model.

The usage rule of the first AI model may be at least one of the foregoing rule #1 to rule #8.

Optionally, the method 400 further includes step 402: The network device sends configuration information of a reference signal to the terminal device.

As described above, time domain behavior of the reference signal may be periodic, semi-persistent, or aperiodic. The network device may configure the time domain behavior of the reference signal and notify the terminal device of the time domain behavior.

Optionally, the method 400 further includes step 403: The network device sends channel state information (channel state information, CSI) report (CSI report) configuration information to the terminal device.

CSI reporting may also be periodic, semi-persistent, or aperiodic. The network device may configure a CSI reporting manner, and notify the terminal device of the CSI reporting manner. For example, if the CSI reporting is periodic, optionally, the CSI reporting configuration information further includes a CSI reporting periodicity. For another example, if the CSI reporting is semi-persistent, optionally, the CSI reporting configuration information further includes a CSI reporting periodicity in each CSI reporting time period.

404: The network device sends the reference signal to the terminal device.

Specifically, the network device may send the reference signal to the terminal device based on the time domain behavior of the reference signal. The reference signal may be used by the terminal device to perform channel measurement.

405: The terminal device performs channel measurement based on the reference signal, to obtain channel information.

It may be understood that the network device may send the reference signal to the terminal device based on configuration of the reference signal, so that the terminal device may perform channel measurement based on the reference signal, to obtain the channel information. In addition, the terminal device may perform reporting based on the CSI reporting configuration information.

406: The terminal device selects, based on the usage rule of the first AI model, a second AI model to perform CSI compression.

Assuming that the usage rule of the first AI model is the rule #2, and the terminal device determines, based on the rule #2, that the time interval between the channel obtaining time corresponding to the first channel information and the channel obtaining time corresponding to the second channel information does not meet the first capability requirement of the first AI model, the terminal device determines the second AI model. The terminal device may perform CSI compression by using the second AI model, that is, the input of the second AI model includes the second channel information, and the state information of the second AI model is the default value. The first channel information may be obtained by the terminal device through channel measurement based on the reference signal before obtaining the second channel information. The channel obtaining time corresponding to the first channel information and the channel obtaining time corresponding to the second channel information may be determined based on reporting time of the channel information.

It is assumed that the first channel information is Hₜ₋ₖ, and the second channel information is Ht. Channel obtaining time corresponding to Hₜ₋ₖ may be determined based on reporting time of Hₜ₋ₖ, and channel obtaining time corresponding to Ht may be determined based on reporting time of Hₜ.

When the CSI reporting manner configured by the network device is periodic, the CSI reporting configuration information in step 403 includes the CSI reporting periodicity. In this way, the terminal device may determine, based on the CSI reporting periodicity, a time interval between the channel reporting time corresponding to Ht and the channel reporting time corresponding to Hₜ₋ₖ, and then determine the second AI model based on the time interval and the first capability requirement of the first AI model.

When the CSI reporting manner configured by the network device is semi-persistent, the CSI reporting configuration information in step 403 includes the CSI reporting periodicity in each CSI reporting time period, and a time interval between previous deactivation and current activation may be determined based on time of deactivation signaling of a previous CSI reporting time period and time of activation signaling of current CSI reporting. In this way, the terminal device may determine a time interval between the channel reporting time corresponding to Ht and the channel reporting time corresponding to Hₜ₋ₖ, and then determine the second AI model based on the time interval and the first capability requirement of the first AI model. Specifically, if the channel reporting time corresponding to Ht and the channel reporting time corresponding to Hₜ₋ₖ are in a same CSI reporting time period, the time interval between the channel reporting time corresponding to Ht and the channel reporting time corresponding to Hₜ₋ₖ is k times the periodicity. If the channel reporting time corresponding to Ht and the channel reporting time corresponding to Hₜ₋ₖ are not in a same CSI reporting time period, as shown in FIG. 5, the time interval between the channel reporting time corresponding to Ht and the channel reporting time corresponding to Hₜ₋ₖ may be represented as S+P+Δ. S represents a time interval between the channel reporting time corresponding to Hₜ₋ₖ and current deactivation signaling in one CSI reporting time period, P represents a time interval between activation signaling and the channel reporting time corresponding to Hₜ in one CSI reporting time period, Δ represents a time interval between the deactivation signaling in the CSI reporting time period in which the channel reporting time corresponding to Hₜ₋ₖ is located and the activation signaling in the CSI reporting time period in which the channel reporting time corresponding to Hₜ is located.

It may be understood that FIG. 4 mainly describes a case in which the time interval between the channel obtaining time corresponding to the first channel information and the channel obtaining time corresponding to the second channel information does not meet the first capability requirement of the first AI model, and constitute no limitation. For example, if the terminal device determines that the time interval between the channel obtaining time corresponding to the first channel information and the channel obtaining time corresponding to the second channel information meets the first capability requirement of the first AI model, the terminal device determines not to switch the AI model, and optionally, the terminal device determines that the input of the first AI model includes the second channel information and the state information of the first AI model, and the state information of the first AI model is determined based on previous output of the first AI model.

For a manner of determining the second AI model, refer to the descriptions in the method 300. Details are not described herein again.

407: The terminal device sends information about the second AI model to the network device.

The information about the second AI model may be information that can be used to identify the second AI model. For example, the information about the second AI model includes an identifier of the second AI model. The network device may select, based on the information about the second AI model that is sent by the terminal device, an AI model that matches the second AI model, to decode output of the second AI model.

408: The terminal device sends a CSI report to the network device.

The CSI report includes feedback information output by the second AI model.

409: The network device selects an AI model that matches the second AI model to perform CSI restoration.

Based on the foregoing technical solution, the terminal device may determine, based on the time interval between the channel obtaining time corresponding to the channel information and the usage rule of the first AI model, to switch from the first AI model to the second AI model. In this way, when determining that the first AI model is inappropriate, the terminal device may further determine the second AI model, and may continue to perform a related operation by using the second AI model, thereby avoiding a performance loss caused by processing channel information by using the inappropriate AI model.

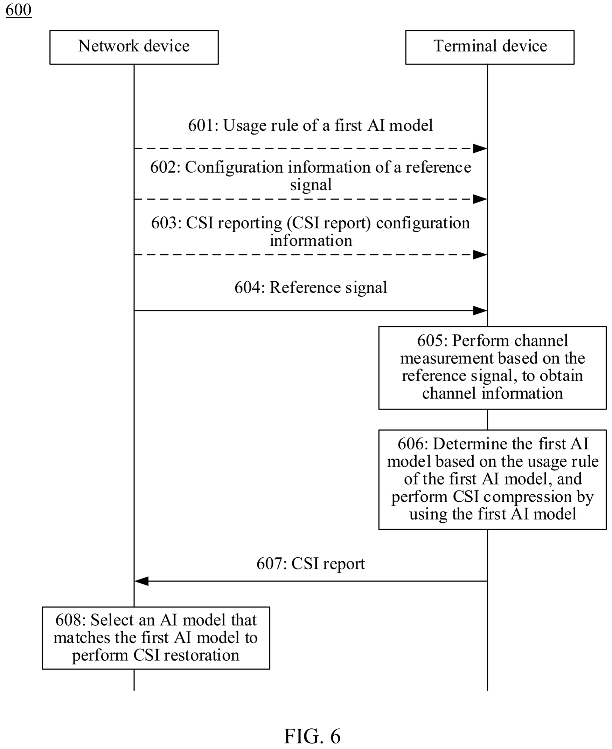

FIG. 6 is a schematic flowchart of a communication method 600 according to another embodiment of this application. An AI model in the method 600 may be used for channel feedback. The method 600 shown in FIG. 6 may include the following steps.

Optionally, the method 600 includes step 601: A network device sends a usage rule of a first AI model to a terminal device.

Optionally, the method 600 further includes step 602: The network device sends configuration information of a reference signal to the terminal device.

Optionally, the method 600 further includes step 603: The network device sends CSI report configuration information to the terminal device.

604: The network device sends the reference signal to the terminal device.

605: The terminal device performs channel measurement based on the reference signal, to obtain channel information.

For steps 601 to 605, refer to descriptions in steps 401 to 405. Details are not described herein again.

606: The terminal device determines input of the first AI model based on the usage rule of the first AI model, and performs CSI compression by using the first AI model.

Step 606 is similar to step 406, and a difference lies in that in step 606, it is assumed that the usage rule of the first AI model is the rule #4.

For example, based on the rule #4, if the terminal device determines that the time interval between the channel obtaining time corresponding to the first channel information and the channel obtaining time corresponding to the second channel information does not meet the second capability requirement of the first AI model, the terminal device determines to perform CSI compression by using the first AI model, where the input of the first AI model includes the second channel information, and the state information of the first AI model is the default value.

For another example, based on the rule #4, if the terminal device determines that the time interval between the channel obtaining time corresponding to the first channel information and the channel obtaining time corresponding to the second channel information meets the second capability requirement of the first AI model, the terminal device determines to perform CSI compression by using the first AI model, where the input of the first AI model includes the second channel information and the state information of the first AI model, the state information of the first AI model is determined based on previous output of the first AI model, and output of the first AI model includes feedback information corresponding to the second channel information and updated state information of the first AI model, which is used as next input of the first AI model.

607: The terminal device sends a CSI report to the network device.

The CSI report includes feedback information output by the first AI model.

608: The network device uses an AI model that matches the first AI model to perform CSI restoration.

Based on the foregoing technical solution, the terminal device may determine the input of the first AI model based on the time interval between the channel obtaining time corresponding to the channel information and the usage rule of the first AI model, so that the input of the first AI model can match a capability requirement of the first AI model, the input of the first AI model is more appropriate, and a performance loss caused by using inappropriate channel information as the input of the first AI model is avoided.

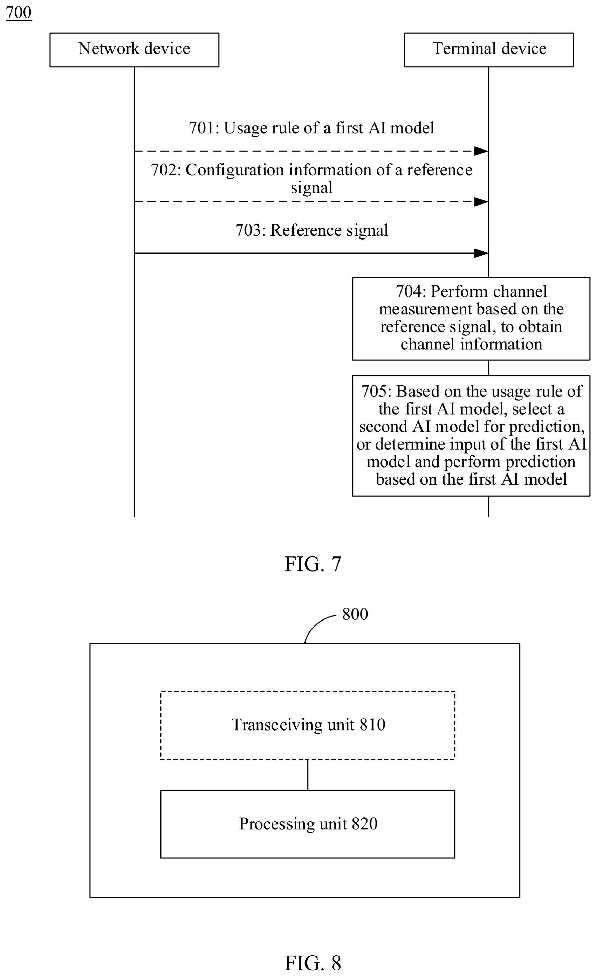

FIG. 7 is a schematic flowchart of a communication method 700 according to an embodiment of this application. An AI model in the method 700 may be used for channel prediction. The method 700 shown in FIG. 7 may include the following steps.

Optionally, the method 700 includes step 701: A network device sends a usage rule of a first AI model to a terminal device.

Optionally, the method 700 further includes step 702: The network device sends configuration information of a reference signal to the terminal device.

For steps 701 and 702, refer to descriptions of steps 401 and 402. Details are not described herein again.

703: The network device sends the reference signal to the terminal device.

704: The terminal device performs channel measurement based on the reference signal, to obtain channel information.

For steps 703 and 704, refer to descriptions of steps 403 and 404. Details are not described herein again.

705: Based on the usage rule of the first AI model, the terminal device selects a second AI model for prediction, or determines input of the first AI model and performs prediction based on the first AI model.

In a possible case, the terminal device determines the second AI model based on the usage rule of the first AI model, and performs prediction based on the second AI model. For example, it is assumed that the usage rule of the first AI model is the rule #1, and the terminal device determines that the time interval between the channel obtaining time corresponding to the first channel information and the channel obtaining time corresponding to the second channel information does not meet the first capability requirement of the first AI model. Therefore, the terminal device determines the second AI model, where input of the second AI model includes at least two pieces of channel information. The at least two pieces of channel information may be obtained by the terminal device through channel measurement based on at least two reference signals, and each piece of channel information corresponds to one time of channel measurement.

In another possible case, the terminal device determines the input of the first AI model based on the usage rule of the first AI model, and performs prediction based on the first AI model. For example, it is assumed that the usage rule of the first AI model is the rule #3, and the terminal device determines that the time interval between the channel obtaining time corresponding to the first channel information and the channel obtaining time corresponding to the second channel information does not meet the second capability requirement of the first AI model. Therefore, the terminal device determines that the input of the first AI model includes M of at least two pieces of channel information and X default values, where the M pieces of channel information do not include the first channel information. The at least two pieces of channel information may be obtained by the terminal device through channel measurement based on at least two reference signals, and each piece of channel information corresponds to one time of channel measurement.

Based on the foregoing technical solution, the terminal device may determine, based on the time interval between the channel obtaining time corresponding to the channel information and the usage rule of the first AI model, to use an appropriate AI model for prediction, or determine appropriate input for the AI model for prediction, to avoid a performance loss caused by using inappropriate channel information as the input of the first AI model, and improve prediction performance.

It may be understood that the foregoing descriptions are mainly provided with reference to channel feedback and channel prediction scenarios, and constitute no limitation. As described above, the AI model may alternatively be used for positioning, beam management, beam prediction, or the like. For these scenarios, refer to the channel feedback or channel prediction scenario.

It may be understood that some optional features in embodiments of this application may be independent of other features in some scenarios, or may be combined with other features in some scenarios. This is not limited.

It may be further understood that, in some of the foregoing embodiments, information sending is mentioned for a plurality of times. For example, A sends information to B. That A sends the information to B may include that A directly sends the information to B, or may include that A sends the information to B via another device or network element. This is not limited.

It may be further understood that some of the foregoing embodiments are mainly described by using a terminal device and a network device as examples, and constitute no limitation. For example, the terminal device may be replaced with a component (for example, a chip or a circuit) of the terminal device, and the network device may be replaced with a component (for example, a chip or a circuit) of the network device.

It may be further understood that the solutions in embodiments of this application may be appropriately combined for use, and explanations or descriptions of terms in the embodiments may be mutually referenced or explained in the embodiments. This is not limited.

The method provided in embodiments of this application is described above in detail with reference to FIG. 3 to FIG. 7. An apparatus provided in embodiments of this application is described below in detail with reference to FIG. 8 to FIG. 10. It should be understood that descriptions of apparatus embodiments correspond to descriptions of method embodiments. Therefore, for content that is not described in detail, refer to the foregoing method embodiments. For brevity, details are not described herein again.

FIG. 8 is a diagram of a communication apparatus 800 according to an embodiment of this application. The apparatus 800 includes a processing unit 820. The processing unit 820 may be configured to perform processing, for example, determine input of a first AI model or determine a second AI model. Optionally, the apparatus 800 further includes a transceiving unit 810. The transceiving unit 810 may be configured to implement a corresponding communication function. The transceiving unit 810 may also be referred to as a communication interface or a communication unit.

Optionally, the apparatus 800 may further include a storage unit. The storage unit may be configured to store instructions and/or data. The processing unit 820 may read the instructions and/or the data in the storage unit, to enable the apparatus to implement the foregoing method embodiments.

The apparatus 800 may be the communication apparatus in the foregoing embodiments (for example, the communication apparatus in FIG. 3, the terminal device in FIG. 4, FIG. 6, and FIG. 7, or the network device in FIG. 4, FIG. 6, and FIG. 7). The apparatus 800 may implement steps or procedures performed by the communication apparatus in the foregoing method embodiments. The transceiving unit 810 may be configured to perform a receiving/sending-related operation (for example, an operation of sending and/or receiving data or a message) of the communication apparatus in the foregoing method embodiments. The processing unit 820 may be configured to perform a processing-related operation of the communication apparatus in the foregoing method embodiments, or an operation other than receiving and sending (for example, an operation other than sending and/or receiving data or a message).

Optionally, the processing unit 820 is configured to determine at least two pieces of channel information. The at least two pieces of channel information include first channel information and second channel information, and the first channel information is obtained before the second channel information. The processing unit 820 is further configured to determine the input of the first AI model or determine the second AI model based on a time interval between channel obtaining time corresponding to the first channel information and channel obtaining time corresponding to the second channel information and at least one capability requirement of the first AI model.

It should be understood that a specific process in which the units perform the foregoing corresponding steps is described in detail in the foregoing method embodiments. For brevity, details are not described herein.

It should be further understood that the apparatus 800 herein is embodied in a form of functional units. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the communication apparatus in the foregoing embodiments, and may be configured to perform procedures and/or steps corresponding to the communication apparatus in the foregoing method embodiments. To avoid repetition, details are not described herein again.

The apparatus 800 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the function. For example, the transceiving unit may be replaced with a transceiver (for example, a sending unit in the transceiving unit may be replaced with a transmitter, and a receiving unit in the transceiving unit may be replaced with a receiver), and another unit, for example, the processing unit, may be replaced with a processor, to respectively perform a receiving/sending operation and a related processing operation in the method embodiments.

In addition, the transceiving unit 810 may alternatively be a transceiving circuit (for example, may include a receiving circuit and a sending circuit), and the processing unit may be a processing circuit.

It should be noted that the apparatus in FIG. 8 may be the communication device in the foregoing embodiments, or may be a chip or a chip system, for example, a system on chip (system on chip, SoC). The transceiving unit may be an input/output circuit or a communication interface. The processing unit is a processor, a microprocessor, or an integrated circuit integrated on the chip. This is not limited herein.

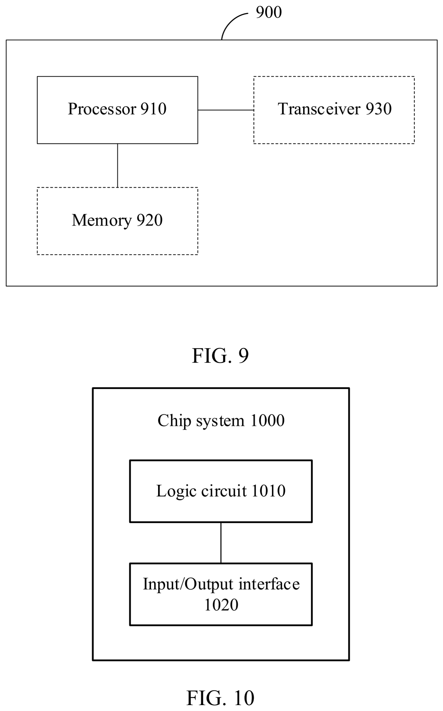

FIG. 9 is a diagram of another communication apparatus 900 according to an embodiment of this application. The apparatus 900 includes a processor 910. The processor 910 is coupled to a memory 920. The memory 920 is configured to store a computer program or instructions and/or data. The processor 910 is configured to execute the computer program or the instructions stored in the memory 920, or read the data stored in the memory 920, to perform the methods in the foregoing method embodiments.

Optionally, there are one or more processors 910.

Optionally, there are one or more memories 920.

Optionally, the memory 920 and the processor 910 are integrated or disposed separately.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal.

For example, the processor 910 may have a function of the processing unit 820 shown in FIG. 8, the memory 920 may have a function of the storage unit, and the transceiver 930 may have a function of the transceiving unit 810 shown in FIG. 8.

In a solution, the apparatus 900 is configured to implement operations performed by the communication apparatus in the foregoing method embodiments.

For example, the processor 910 is configured to execute the computer program or the instructions stored in the memory 920, to implement related operations of the communication apparatus in the foregoing method embodiments.

It should be understood that, the processor mentioned in this embodiment of this application may be a central processing unit (central processing unit, CPU) or another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. For example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described herein is intended to include but is not limited to these and any other appropriate type of memory.

FIG. 10 is a diagram of a chip system 1000 according to an embodiment of this application. The chip system 1000 (or may be referred to as a processing system) includes a logic circuit 1010 and an input/output interface (input/output interface) 1020.

The logic circuit 1010 may be a processing circuit in the chip system 1000. The logic circuit 1010 may be coupled and connected to a storage unit, and invoke instructions in the storage unit, to enable the chip system 1000 to implement the methods and functions in embodiments of this application. The input/output interface 1020 may be an input/output circuit in the chip system 1000, and outputs information processed by the chip system 1000, or inputs to-be-processed data or signaling information to the chip system 1000 for processing.

Specifically, for example, if the chip system 1000 is installed in a communication apparatus, the logic circuit 1010 is coupled to the input/output interface 1020, and the input/output interface 1020 may input a reference signal to the logic circuit 1010 for processing, for example, performing channel measurement on the reference signal to obtain channel information, or determining input of a first AI model or determining a second AI model based on a time interval between channel obtaining time corresponding to channel information and at least one capability requirement of the first AI model.

In a solution, the chip system 1000 is configured to implement operations performed by the communication apparatus in the foregoing method embodiments.

For example, the logic circuit 1010 is configured to implement a processing-related operation performed by the communication apparatus in the foregoing method embodiments, and the input/output interface 1020 is configured to implement a sending and/or receiving related operation performed by the communication apparatus in the foregoing method embodiments.

An embodiment of this application further provides a computer-readable storage medium. The computer-readable storage medium stores computer instructions for implementing the method performed by the communication apparatus in the foregoing method embodiments.

For example, when the computer instructions are or program is executed by a computer, the computer is enabled to implement the method performed by the communication apparatus in the foregoing method embodiments.

An embodiment of this application further provides a computer program product including instructions. When the instructions are executed by a computer, the method performed by the communication apparatus in the foregoing method embodiments is implemented.

An embodiment of this application further provides a communication system. The communication system includes the terminal device and/or the network device in the foregoing embodiments. For example, the system includes the terminal device and/or the network device in the embodiments shown in FIG. 4, FIG. 6, and FIG. 7.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing embodiments may be all or partly implemented by using software, hardware, firmware, or any combination thereof. When software is used for implementation, the embodiments may be all or partly implemented in a form of a computer program product. The computer program product includes one or more computer instructions. When the computer program instructions are loaded and executed on a computer, the procedures or functions according to embodiments of this application are all or partly generated. The computer may be a general-purpose computer, a dedicated computer, a computer network, or other programmable apparatuses. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining at least two pieces of channel information, wherein the at least two pieces of channel information comprise first channel information and second channel information, and the first channel information is obtained before the second channel information; and
determining input of a first artificial intelligence AI model or determining a second AI model based on a time interval between channel obtaining time corresponding to the first channel information and channel obtaining time corresponding to the second channel information and at least one capability requirement of the first AI model.

2. The method according to claim 1, wherein the determining the input of the first AI model or determining the second AI model based on the time interval between the channel obtaining time corresponding to the first channel information and the channel obtaining time corresponding to the second channel information and the at least one capability requirement of the first AI model comprises any one of the following:
determining the second AI model when determining that the time interval between the channel obtaining time corresponding to the first channel information and the channel obtaining time corresponding to the second channel information does not meet a first capability requirement of the first AI model, wherein input of the second AI model comprises the at least two pieces of channel information; or
determining the second AI model when determining that the time interval between the channel obtaining time corresponding to the first channel information and the channel obtaining time corresponding to the second channel information does not meet the first capability requirement of the first AI model, wherein the input of the second AI model comprises the second channel information, and state information of the second AI model is a default value; or
when determining that the time interval between the channel obtaining time corresponding to the first channel information and the channel obtaining time corresponding to the second channel information does not meet a second capability requirement of the first AI model, determining that the input of the first AI model comprises M of the at least two pieces of channel information and X default values, wherein the M pieces of channel information do not comprise the first channel information, M is an integer greater than or equal to 1, and X is an integer greater than or equal to 0; or
when determining that the time interval between the channel obtaining time corresponding to the first channel information and the channel obtaining time corresponding to the second channel information does not meet the second capability requirement of the first AI model, determining that the input of the first AI model comprises the second channel information, and state information of the first AI model is the default value.

3. The method according to claim 2, wherein
the determining the at least two pieces of channel information comprises:
receiving reference signals, and performing measurement based on the reference signals to obtain the at least two pieces of channel information, wherein
the channel obtaining time corresponding to the first channel information is determined based on receiving time or sending time of the reference signal used to obtain the first channel information through measurement, or is determined based on reporting time of the first channel information; and the channel obtaining time corresponding to the second channel information is determined based on receiving time or sending time of the reference signal used to obtain the second channel information through measurement, or is determined based on reporting time of the second channel information.

4. The method according to claim 3, wherein
the reference signal is periodic, and the time interval between the channel obtaining time corresponding to the first channel information and the channel obtaining time corresponding to the second channel information is determined based on a periodicity of the reference signal; or
the reference signal is semi-persistent, and the time interval between the channel obtaining time corresponding to the first channel information and the channel obtaining time corresponding to the second channel information is determined based on a time interval between activation signaling and deactivation signaling, wherein
the activation signaling is used to activate the reference signal used to obtain the second channel information through measurement, and the deactivation signaling is used to deactivate the reference signal used to obtain the first channel information through measurement; or the activation signaling is used to activate reporting of the second channel information, and the deactivation signaling is used to deactivate reporting of the first channel information.

5. The method according to claim 1, wherein the determining the input of the first AI model or determining the second AI model based on the time interval between the channel obtaining time corresponding to the first channel information and the channel obtaining time corresponding to the second channel information and the at least one capability requirement of the first AI model comprises:
determining the second AI model when determining that the time interval between the channel obtaining time corresponding to the first channel information and the channel obtaining time corresponding to the second channel information does not meet a first capability requirement of the first AI model, wherein input of the second AI model comprises feedback information of the at least two pieces of channel information; or
determining the second AI model when determining that the time interval between the channel obtaining time corresponding to the first channel information and the channel obtaining time corresponding to the second channel information does not meet the first capability requirement of the first AI model, wherein the input of the second AI model comprises feedback information of the second channel information, and state information of the second AI model is a default value; or
when determining that the time interval between the channel obtaining time corresponding to the first channel information and the channel obtaining time corresponding to the second channel information does not meet a second capability requirement of the first AI model, determining that the input of the first AI model comprises feedback information of M of the at least two pieces of channel information and X default values, wherein the M pieces of channel information do not comprise the first channel information, M is an integer greater than or equal to 1, and X is an integer greater than or equal to 0; or
when determining that the time interval between the channel obtaining time corresponding to the first channel information and the channel obtaining time corresponding to the second channel information does not meet the second capability requirement of the first AI model, determining that the input of the first AI model comprises the feedback information of the second channel information, and state information of the first AI model is the default value.

6. The method according to claim 5, wherein
the determining the at least two pieces of channel information comprises:
sending reference signals, receiving the feedback information of the at least two pieces of channel information, and obtaining the at least two pieces of channel information based on the feedback information of the at least two pieces of channel information, wherein the channel obtaining time corresponding to the first channel information is determined based on sending time of the reference signal used to obtain the first channel information through measurement, or is determined based on reporting time of the first channel information; and the channel obtaining time corresponding to the second channel information is determined based on sending time of the reference signal used to obtain the second channel information through measurement, or is determined based on reporting time of the second channel information.

7. The method according to any one of claims 2 to 6, wherein the M pieces of channel information further do not comprise channel information before the first channel information, or the M pieces of channel information further do not comprise channel information before the second channel information.

8. The method according to any one of claims 2 to 7, wherein
the first capability requirement of the first AI model is that a time interval between channel obtaining time is within a first value range; and/or
the second capability requirement of the first AI model is that a time interval between channel obtaining time is within a second value range.

9. The method according to claim 8, wherein
the first value range is less than or equal to T1; and/or
the second value range is less than or equal to T2, wherein
T1 is a maximum value of the time interval that is between channel obtaining time and that corresponds to the first capability requirement of the first AI model, and T2 is a maximum value of the time interval that is between channel obtaining time and that corresponds to the second capability requirement of the first AI model.

10. The method according to claim 9, wherein a value of T1 and/or a value of T2 are/is determined in any one of the following manners: being determined by a network device, being determined by a terminal device, or being predefined.

11. The method according to any one of claims 1 to 10, wherein the method further comprises:
obtaining first indication information, wherein the first indication information indicates the at least one capability requirement of the first AI model.

12. The method according to any one of claims 1 to 11, wherein
the first channel information is any one of the at least two pieces of channel information other than the second channel information, or the first channel information and the second channel information are separated by k pieces of channel information, wherein k is an integer greater than or equal to 1.

13. The method according to claim 12, wherein the method further comprises:
obtaining second indication information, wherein the second indication information indicates k.

14. A communication apparatus, comprising a module or a unit configured to perform the method according to any one of claims 1 to 13.

15. A communication apparatus, comprising a processor, wherein the processor is configured to enable the communication apparatus to perform the method according to any one of claims 1 to 13.

16. The apparatus according to claim 15, wherein the apparatus further comprises a communication interface, and the communication interface is coupled to the processor; and
the communication interface is configured to input and/or output information.

17. The apparatus according to claim 15 or 16, wherein the apparatus further comprises a memory, the memory is configured to store a computer program or instructions, and the processor is configured to execute the computer program or the instructions stored in the memory.

18. A computer-readable storage medium, wherein the computer-readable storage medium stores a computer program or instructions, and when the computer program or the instructions are run on a communication apparatus, the communication apparatus is enabled to perform the method according to any one of claims 1 to 13.

19. A computer program product, wherein the computer program product comprises a computer program or instructions used to perform the method according to any one of claims 1 to 13.

20. A chip, wherein the chip is coupled to a memory, and is configured to read and execute program instructions stored in the memory, to implement the method according to any one of claims 1 to 13.
